# EUROPÄISCHE PATENTSCHRIFT

(11) **EP 1 226 198 B1**
(45) Veröffentlichungstag und Bekanntmachung des Hinweises auf die Patenterteilung: **29.03.2006**
(21) Anmeldenummer: 00969451.4
(22) Anmeldetag: 09.10.2000
(51) Int. Cl.: C08G 18/67, C08G 18/08, C08G 18/80, C08F 290/06, C09D 175/14

(54) **SELBSTVERNETZENDE POLYURETHANE UND PFROPFMISCHPOLYMERISATE AUF POLYURETHANBASIS SOWIE IHRE VERWENDUNG ZUR HERSTELLUNG VON BESCHICHTUNGSSTOFFEN, KLEBSTOFFEN UND DICHTUNGSMASSEN**
SELF CROSSLINKING POLYURETHANES AND GRAFT COPOLYMERS BASED ON POLYURETHANE, FOR PRODUCING COATING MATERIALS, ADHESIVES AND SEALING MASSES
POLYURETHANNES A AUTO-RETICULATION ET COPOLYMERES GREFFES A BASE DE POLYURETHANNE ET LEUR UTILISATION POUR LA PRODUCTION DE MATIERES DE REVETEMENT, D'ADHESIFS ET DE MASSES D'ETANCHEITE

(30) Priorität: 06.11.1999 DE 19953445
(43) Veröffentlichungstag der Anmeldung: 31.07.2002
(73) Patentinhaber: BASF Coatings Aktiengesellschaft, 48165 Münster (DE)
(72) Erfinder: SCHWARTE, Stephan, 48282 Emsdetten (DE); WEGNER, Egon, 97209 Veitshöchheim (DE); ANGERMÜLLER, Harald, 97078 Würzburg (DE)
(74) Vertreter: Fitzner, Uwe
(86) Internationale Anmeldenummer: PCT/EP2000/009849
(87) Internationale Veröffentlichungsnummer: WO 2001/034674

(56) Entgegenhaltungen:
- EP-A- 0 331 409
- US-A- 5 093 412
- T.J.CHEN: "Preparation and polymerization of new dual active functional monomers" POLYM. MATER. SCI. ENG., Bd. 57, 1987, Seiten 565-9, XP000926156

## Beschreibung

Die vorliegende Erfindung betrifft neue selbstvernetzende Polyurethane und neue selbstvernetzende Pfropfmischpolymerisate auf Polyurethanbasis. Außerdem betrifft die vorliegende Erfindung neue Verfahren zur Herstellung von selbstvernetzenden Polyurethanen und selbstvernetzenden Pfropfmischpolymerisaten auf Polyurethanbasis. Des weiteren betrifft die vorliegende Erfindung die Verwendung der neuen selbstvernetzenden Polyurethane und der neuen selbstvernetzenden Pfropfmischpolymerisate auf Polyurethanbasis zu Herstellung von selbstvernetzenden Beschichtungsstoffen, Klebstoffen und Dichtungsmassen. Darüber hinaus betrifft die vorliegende Erfindung neue selbstvernetzende Beschichtungsstoffe, Klebstoffe und Dichtungsmassen, insbesondere wäßrige selbstvernetzende Beschichtungsstoffe, Klebstoffe und Dichtungsmassen. Nicht zuletzt betrifft die vorliegende Erfindung neue Beschichtungen, Klebschichten und Dichtungen, die aus den neuen, insbesondere wäßrigen, selbstvernetzenden Beschichtungsstoffen, Klebstoffen und Dichtungsmassen erhältlich sind. Insbesondere betrifft die vorliegende Erfindung dekorative und/oder schützende ein- oder mehrschichtige Lackierungen, speziell farb- und/oder effektgebende Mehrschichtlackierungen.

Im Rahmen der vorliegenden Erfindung bezeichnet der Begriff "selbstvernetzend" die Eigenschaft eines Bindemittels (zu den Begriff vgl. Römpp Lexikon Lacke und Druckfarben, Georg Thieme Verlag, Stuttgart, New York, 1998, »Bindemittel«, Seiten 73 und 74) mit sich selbst Vemetzungsreaktionen einzugehen. Voraussetzung hierfür ist, das in den Bindemitteln bereits beide Arten von komplementären reaktiven funktionellen Gruppen enthaltend sind, die für eine Vernetzung notwendig sind. Als fremdvernetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hier zur auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Fremdvernetzende Pfropfmischpolymerisate, die in Wasser löslich oder dispergierbar sind, sind aus der europäischen Patentschrift EP-A-0 608 021 bekannt. Sie bestehen aus einem Kern aus einem hydrophoben olefinisch ungesättigten Polyurethan und einer Schale aus einem hydrophilen Acrylatcopolymeren, die eine Säurezahl von 30 bis 120 mg KOH/g aufweist. Das hydrophobe olefinisch ungesättigte Polyurethan wird hergestellt, indem man niedermolekulare Diole oder Polyesterdiole einer Säurezahl von weniger als 5 mg KOH/g mit Diisocyanaten und 1-(1-Isocyanato-1-methylethyl)-3-(1-methylethenyl)-benzol (Dimethyl-m-isopropenyl-benzylisocyanat) umsetzt, wodurch insbesondere endständige Ethylenarylengruppen resultieren. Im Anschluß daran wird ein Gemisch aus olefinisch ungesättigte Monomeren in der Gegenwart des hydrophoben olefinisch ungesättigten Polyurethans in Lösung polymerisiert, wonach das erhaltene Pfropfmischpolymerisat neutralisiert und in Wasser dispergiert wird, wodurch eine Sekundärdispersion resultiert. Diese bekannten Sekundärdispersionen werden zur Herstellung von Klarlacken verwendet. Pigmentierte Beschichtungsstoffe oder Dichtungsmassen und Klebstoffe gehen aus der EP-A-0 608 021 nicht hervor.

Aus dem deutschen Patent DE-C-197 22 862 ist ein fremdvernetzendes Pfropfmischpolymerisat bekannt, das erhältlich ist, indem man in einer Dispersion eines olefinisch ungesättigten, hydrophile funktionelle Gruppen aufweisenden Polyurethans mit im statistischen Mittel 0,05 bis 1,1 polymerisierbaren Doppelbindungen pro Molekül olefinisch ungesättigte Monomere polymerisiert. Bei der Herstellung der Polyurethanhauptketten können nach DE-C-197 22 862 neben Diisocyanaten auch Polyisocyanate verwendet werden, deren Funktionalität durch die Zugabe von Monoisocyanaten abgesenkt wird. 1-(1-Isocyanato-1-methylethyl)-3-(1-methylethenyl)-benzol wird beispielhaft als Monoisocyanat angegeben. Sofern es verwendet wird, trägt es einen gewissen Teil zum Gehalt an polymerisierbaren Doppelbindungen des Polyurethans bei, indes sind für deren Einführung in der Hauptsache Verbindungen vorgesehen, die mit Isocyanatgruppen reaktive funktionelle Gruppen und olefinisch ungesättigte Doppelbindungen enthalten, wie beispielsweise Hydroxyalkyl(meth)acrylate.

Dasselbe fremdvernetzende Polyurethan bzw. das hierauf basierende fremdvernetzende Pfropfmischpolymerisat gehen auch aus der deutschen Patentanmeldung DE-A-196 45 761 hervor. Auch dort wird 1-(1-Isocyanato-1-methylethyl)-3-(1-methylethenyl)-benzol, das dort als Isopropenyl-alpha,alpha-dimethylbenzylisocyanat bezeichnet wird, verwendet.

Die bekannten fremdvernetzenden Pfropfmischpolymerisate der DE-C-197 22 862 und der DE-A-196 45 761 liegen als Primärdispersionen vor und sind sehr gut für die Herstellung wäßriger fremdvernetzender Beschichtungsstoffe, insbesondere Wasserbasislacke, geeignet. Die Wasserbasislacke können mit Vorteil für das Naß-in-naß-Verfahren verwendet werden, bei dem der Wasserbasislack auf ein grundiertes oder ungrundiertes Substrat appliziert wird, wonach die resultierende Wasserbasislackschicht getrocknet, indes nicht vernetzt wird. Auf die getrocknete Wasserbasislackschicht wird dann ein Klarlack appliziert, wonach man die Wasserbasislackschicht und die Klarlackschicht unter Bildung einer farb- und/oder effektgebenden Mehrschichtlackierung gemeinsam aushärtet.

Für die Vernetzung dieser bekannten Wasserbasislacke werden hydrophobe Vernetzungsmittel verwendet, die über Colösemittel oder Emulgatoren in die wäßrigen Beschichtungsstoffe eingearbeitet werden müssen. Wegen ihrer hydrophoben Eigenschaften und der daraus resultierenden vergleichsweise schlechten Verteilung in dem wäßrigen Beschichtungsstoff müssen größere Mengen an Vernetzungsmitteln eingearbeitet werden, als für eine ausreichende Vernetzung und Haftung der resultierenden Beschichtung, insbesondere des Wasserbasislacks, an und für sich notwendig wären. Außerdem erhöhen die Colösemittel wieder die Emission organischer Stoffe bei der Trocknung und Härtung, was ja durch die Verwendung wäßriger Beschichtungsstoffe gerade verringert oder ganz vermieden werden sollte. Des weiteren beeinflussen Reste von Vernetzungsmitteln, Emulgatoren und Colösemittel das sogenannte Flash-off-Verhalten der bekannten Wasserbasislackschichten in nachteiliger Weise, was sich durch eine Erniedrigung der Schichtdicke, ab der Rißbildung (mud cracking) und Kocher auftreten, bemerkbar macht. Die Verwendung hydrophiler Vernetzungsmittel könnte zwar die mit der Verwendung der Colösemittel und Emulgatoren verbundenen Nachteile in gewissem Umfang beheben, indes sinken dann die Schwitzwasser- und Witterungsbeständigkeit der entsprechenden Beschichtungen.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Die vorstehend geschilderten Probleme werden noch verschärft, wenn die bekannten Wasserbasislacke zusammen mit Pulverslurry-Klarlacken zur Herstellung farb- und/oder effektgebender Mehrschichtlackierungen verwendet werden.

Darüber hinaus kann sich in manchen Fällen der Gehalt der Polyurethane an olefinisch ungesättigten Gruppen als zu niedrig für eine vollständige Pfropfung erweisen, so daß ein großer Teil der aufzupfropfenden Monomere separate Homo- und/oder Copolymerisate neben dem Poylurethan bilden, die die anwendungstechnischen Eigenschaften der Pfropfinischpolymerisate und der hiermit hergestellten Beschichtungsstoffe, Klebstoffe und Dichtungsmassen beeinträchtigen können.

Die Ethenylarylengruppe stellt aufgrung ihrer hohen Reaktivität eine sehr gute Pfropfstelle zum Aufpolymerisieren olefinisch ungesättigter Monomere dar. Indes bereitet die Einführung dieser Gruppen über 1-(1-Isocyanato-1-methylethyl)-3-(1-methylethenyl)-benzol Probleme, da die Isocyanatgruppe wegen der sterischen Hinderung vergleichsweise reaktionsträge ist, was entweder lange Reaktionszeiten und/oder hohe Reaktionstemperaturen erfordert, was beides zu einer Schädigung der Produkte führen kann. Außerdem können mit Hilfe dieser Verbindung nicht ohne weiteres seitenständige Ethenylarylengruppen in die Polyurethane eingeführt werden, es sei denn, es sind bereits laterale isocyanatreaktive Gruppen im Polyurethan vorhanden, mit denen die Verbindung reagieren kann.

Aus der deutschen Patentanmeldung mit DE-A-197 53 222 ist eine Primärdispersion aus einem selbstvernetzenden Pfropfinischpolymerisat bekannt, das durch radikalische Emulsionspolymerisation von Vinylmonomeren, von denen mindestens eines eine Acetoacetoxygruppe trägt, in der Gegenwart eines (potentiell) anionische Gruppen enthaltenden gesättigten Polyurethans herstellbar ist. Das resultierende Pfropfmischpolymerisat wird durch die Zugabe von Polyaminen wie Diethylentriamin, die ionisch an das Bindemittel, d. h. das Pfropfmischpolymerisat, gebunden werden, selbstvernetzend. Die Vernetzung läuft bereits bei Raumtemperatur unter Enaminbildung ab, was die Lagerstabilität stark beeinträchtigt. Die bekannte Primärdispersion wird für die Herstellung von Klarlacken verwendet. Ob sie auch für die Herstellung von Wasserbasislacken geeignet ist, läßt sich der DE-A-197 53 222 nicht entnehmen. Der hohe Gehalt an Polyaminen läßt befürchten, daß diese bekannten Primärdispersionen bei Temperaturen, wie sie üblicherweise bei der Herstellung farb- und/oder effektgebender Mehrschichtlackierungen für Automobilkarosserien angewandt werden, vergilben. Außerdem treten hier die vorstehend geschilderten Probleme, die mit einer zu geringen Pfropfaktivität verknüpft sind, wegen der Verwendung gesättigter Polyurethane verstärkt auf.

Aufgabe der vorliegenden Erfindung ist es, neue selbstvernetzende olefinisch ungesättigte Polyurethane bereitzustellen, die sich gezielt und in einfacher Weise ohne die Gefahr der Produktschädigung herstellen lassen und die hervorragende Pfropfgrundlagen für olefinisch ungesättigte Monomere darstellen.

Eine weitere Aufgabe der vorliegenden Erfindung ist es, ein neues Verfahren zur Herstellung selbstvemetzender olefinisch ungesättigter Polyurethane zu finden, das gezielt in einfacher Weise ohne die Gefahr der Produktschädigung hydrophile oder hydrophobe Polyurethane mit seitenständigen und/oder endständigen Ethenylarylengruppen liefert.

Noch eine weitere Aufgaben der vorliegenden Erfindung ist es, neue selbstvernetzende Pfropfinischpolymerisate, insbesondere in der Form von Primärdispersionen, zu finden, die sich in einfacher Weise gezielt und ohne die Gefahr der Produktschädigung herstellen lassen.

Noch eine weitere Aufgabe der vorliegenden Erfindung ist es, neue wäßrige und nicht wäßrige selbstvernetzende Beschichtungsstoffe, Klebstoffe und Dichtungsmassen auf Polyurethanbasis mit sehr guten anwendungstechnischen Eigenschaften bereitzustellen. Insbesondere sollen neue selbstvernetzende Beschichtungsstoffe, insbesondere neue wäßrige selbstvernetzende Beschichtungsstoffe, speziell neue selbstvernetzende Wasserbasislacke, bereitgestellt werden, die die Nachteile des Standes der Technik nicht mehr länger aufweisen, sondern sich hervorragend für die Applikation nach dem Naß-in-Naß-Verfahren eignen. Hierbei soll es auch bei der Verwendung von Pulverklarlack-Slurries nicht zu einer Rißbildung (mud cracking) oder zu Kochern oder Nadelstichen kommen.. Dabei sollen die neuen Beschichtungsstoffe eine sehr gute Lagerstabilität, hervorragende Applikationseigenschaften, wie einen sehr guten Verlauf und eine sehr geringe Läuferneigung auch bei hohen Schichtdicken zeigen. Die hiermit hergestellten Mehrschichtlackierungen sollen einen hervorragenden optischen Gesamteindruck sowie eine hohe Chemikalien-, Vergilbungs- und Witterungsbeständigkeit aufweisen. Nicht zuletzt soll keine Enthaftung der Schichten nach dem Wasserstrahltest mehr auftreten. Alle diese Vorteile sollen erzielt werden können, ohne daß einer Erhöhung der Emission organischer Verbindungen in Kauf genommen werden muß.

Demgemäß wurde das neue selbstvernetzende Polyurethan (B) mit mindestens einer seitenständigen und/oder mindestens einer endständigen Ethenylarylengruppe gefunden, das herstellbar ist, indem man
(1) mindestens ein Polyurethanpräpolymer (B1), das mindestens eine freie und mindestens eine blockierte Isocyanatgruppe enthält, mit
(2) mindestens einem Addukt (B2) umsetzt, das erhältlich ist, indem man
   (2.1) mindestens ein Ethenylarylenmonoisocyanat und
   (2.2) mindestens ein Polyol, Polyamin und/oder mindestens eine mindestens eine Hydroxylgruppe und mindestens eine Aminogruppe enthaltenden Verbindung
   so miteinander umsetzt, daß mindestens eine isocyanatreaktive Gruppe im Addukt (B2) verbleibt.

Im folgenden wird das neue selbstvernetzende Polyurethan mit mindestens einer seitenständigen und/oder mindestens einer endständigen Ethenylarylengruppe der Kürze halber als "erfindungsgemäBes Polyurethan" bezeichnet.

Des weiteren wurde das neue selbstvernetzende Pfropfmischpolymerisat gefunden, das
A) mindestens ein (Meth)Acrylatcopolymerisat und
B) mindestens ein Polyurethan,
enthält und das herstellbar ist, indem man
1) mindestens ein selbstvernetzendes olefinisch ungesättigtes Polyurethan (B) mit mindestens einer seitenständigen und/oder mindestens einer endständigen Ethenylarylengruppe und mindestens einer blockierten Isocyanatgruppe in einem wäßrigen Medium dispergiert, wonach man
2) eine Mischung aus mindestens einem Monomer (a1) mit mindestens einer isocyanatreaktiven funktionellen Gruppe und mindestens einem hiermit copolymerisierbaren Monomer (a2) in der Gegenwart des Polyurethans (B) oder der Polyurethane (B) in Emulsion radikalisch copolymerisiert.

Des weiteren wurden die neuen Klebstoffe, Dichtungsmassen und Beschichtungsstoffe, vor allem Lacke, insbesondere wäßrige Lacke, speziell Wasserbasislacke, gefunden, die mindestens ein erfindungsgemäßes Polyurethan (B) und/oder mindestens ein erfindungsgemäßes Pfropfmischpolymerisat enthalten und im folgenden als erfindungsgemäße Klebstoffe, Dichtungsmassen und Beschichtungsstoffe bezeichnet werden.

Nicht zuletzt wurden neue Klebschichten, Dichtungen und Beschichtungen, insbesondere Lackierungen, gefunden, die mit Hilfe der erfindungsgemäßen Klebstoffe, Dichtungsmassen und Beschichtungsstoffe hergestellt werden und im folgenden als erfindungsgemäße Klebschichten, Dichtungen und Beschichtungen bezeichnet werden.

Darüber hinaus wurden neue Substrate gefunden, die mindestens eine erfindungsgemäße Klebschicht, Dichtung und/oder Beschichtung enthalten und im folgenden als erfindungsgemäße Substrate bezeichnet werden.

Weitere erfindungsgemäße Gegenstände gehen aus der Beschreibung hervor.

Im Hinblick auf den Stand der Technik war es überraschend und für den Fachmann nicht vorhersehbar, daß die komplexe Aufgabe, die der vorliegenden Erfindung zugrunde lag, mit Hilfe der erfindungs gemäßen Polyurethane (B) und/oder der erfindungsgemäßen Pfropfmischpolymerisate gelöst werden konnte. Insbesondere überraschte, daß die erfindungsgemäBen Polyurethane (B) und die erfindungsgemäßen Pfropfinischpolymerisate in einfacher Weise gezielt hergestellt werden können, ohne daß es hierbei zu einer Schädigung der erfindungsgemäßen Produkte kommt. Des weiteren überraschte die außerordentlich breite Verwendbarkeit der erfindungsgemäßen Polyurethan (B) und der erfindungsgemäßen Pfropfmischpolymerisate und ihre hohe Lagerstabilität auch unter klimatischen Extrembedingungen wie Tropenklima oder besonders heiße Sommertage. Völlig unvorhersehbar war, daß insbesondere die erfindungsgemäßen Pfropfmischpolymerisate Wasserbasislacke liefern, die mit Pulverklarlack-Slurries nach dem Naß-in-naß-Verfahren zu hervorragenden farb- und/oder effektgebenden Mehrschichtlackierungen verarbeitet werden können, ohne daß es zu einer Rißbildung (mud cracking) und zu Kochern oder Nadelstichen in den Klarlackierungen oder zur Enthaflung der Klarlackierungen nach dem Wasserstrahltest kommt.

Das erfmdungsgemäße Polyurethan (B) enthält mindestens eine seitenständige und/oder mindestens eine endständige Ethenylarylengruppe. Mit anderen Worten: das erfindungsgemäße Polyurethan (B) enthält mindestens eine seitenständige, mindestens eine endständige oder mindestens eine seitenständige und mindestens eine endständige Ethenylarylengruppe. Hierbei bieten die erfindungsgemäßen Polyurethane (B), die mindestens eine seitenständige Ethenylarylengruppe enthalten, besondere Vorteile und sind deshalb erfindungsgemäß besonders bevorzugt.

Das erfindungsgemäße Polyurethan (B) ist im vorstehend genannten Sinne hydrophil oder hydrophob. Hinsichtlich ihrer Verwendung zur Herstellung der erfindungsgemäßen Pfropfmischpolymerisate bieten die hydrophilen erfindungsgemäßen Polyurethane (B) Vorteile und werden deshalb bevorzugt verwendet.

Das erfindungsgemäße Polyurethan (B) ist erhältlich, indem man in einem ersten Verfahrensschritt ein Polyurethanpräpolymer (B1), daß mindestens eine freie und mindestens eine blockierte Isocyanatgruppe enthält, herstellt.

Das Polyurethanpräpolymer (B1) ist linear, verzweigt oder kammartig, insbesondere aber linear, aufgebaut. Hierbei enthält das lineare Polyurethanpräpolymer (B1) im statistischen Mittel vorzugsweise zwei freie Isocyanatgruppen, insbesondere zwei endständige freie Isocyanatgruppen. Die verzweigten oder kammartig aufgebauten Polyurethanpräpolymere (B1) enthalten vorzugsweise mindestens zwei, insbesondere mehr als zwei freie Isocyanatgruppen, wobei endständige freie Isocyanatgruppen bevorzugt sind.

Vorzugsweise sind im Poylurethanpräpolymer im statistischen Mittel mindestens zwei, insbesondere mehr als zwei, blockierte Isocyanatgruppen enthalten. Vorzugsweise handelt es sich um seitenständige blockierte Isocyanatgruppen.

Blockierungsmittel sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenhamstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime oder Ketoxime wie Acetonoxim, Formaldoxim, Acetaldoxim Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie
xvii) Gemische dieser Blockierungsmittel wieDimethylpyrazol und Triazole, Malonester und Acetessigsäureester oder Dimethylpyrazol und Succinimid.

Von diesen Blockierungsmitteln bieten die Oxime und Ketoxime xiii), insbesondere die Ketoxime xiii), speziell Methylethylketoxim, besondere Vorteile und werden deshalb besonders bevorzugt verwendet.

Methodisch gesehen weist die Herstellung der erfindungsgemäß zu verwendenden Polyurethanpräpolymere (B1) keine Besonderheiten auf, sondern erfolgt beispielsweise wie in den Patentschriften DE-C-197 22 862, DE-A-196 45 761, EP-A-0 522 419 oder EP-A-0 522 420 beschrieben, durch Umsetzung eines Polyols, insbesondere eines Diols, mit mindestens einem Polyisocyanat, insbesondere einem Diisocyanat, wobei die Isocyanatkomponente im molaren Überschuß angewandt wird.

Zusätzlich wird hierbei zum Zwecke der Einführung der blockierten Isocyanatgruppen erfindungsgemäß bevorzugt noch mindestens eine Verbindung (B1.1) verwendet, die mindestens eine, insbesondere eine, blockierte Isocyanatgruppe und mindestens eine, insbesondere zwei, isocyanatreaktive funktionelle Gruppen enthält. Beispiele geeigneter isocyanatreaktiver Gruppen sind -SH, -NH₂, >NH, -OH, -O-(CO)-NH-(CO)-NH₂ oder -O-(CO)-NH₂, von denen die primären und sekundären Aminogruppen und die Hydroxylgruppe von Vorteil und die Hydroxylgruppen von besonderem Vorteil sind.

Vorzugsweise werden diese Verbindungen (B1.1) hergestellt, indem man in einem ersten Verfahrensschritt mindestens ein Polyisocyanat, insbesondere ein Düsocyanat, mit mindestens einem der vorstehend beschriebenen monofunktionellen Blockierungsmittel in einem Molverhältnis umsetzt, daß in dem resultierenden Zwischenprodukt im statistischen Mittel mindestens eine, insbesondere eine, freie Isocyanatgruppe verbleibt.

Das Zwischenprodukt wird anschließend in einem zweiten Verfahrensschritt mit mindestens einer Verbindung umgesetzt, die mindestens zwei, insbesondere zwei oder drei, isocyanatreaktive funktionelle Gruppen im Molekül enthält. Hierbei wird das Molverhältnis von Zwischenprodukt zu di- oder trifunktioneller Verbindung so gewählt, daß eine oder zwei isocyanatreaktive funktionelle Gruppen in der resultierenden Verbindung (B1.1) verbleiben.

Beispiele geeigneter Polyisocyanate zur Herstellung der Verbindungen (B1.1) sind die nachstehend beschriebenen.

Beispiele geeigneter Verbindungen mit zwei oder drei isocyanatreaktiven funktionellen Gruppen zur Herstellung der Verbindungen (B1.1) sind die nachstehend beschriebenen niedermolekularen Polyole, Polyamine oder Aminoalkohole.

Die Verbindungen (B1.1) mit einer isocyanatreaktiven funktionellen Gruppe dienen insbesondere der Einführung endständiger blockierter Isocanatgruppen in die Polyurethanpräpolymeren (B1). Die Verbindungen (B1.1) mit zwei isocyanatreaktiven funktionellen Gruppen dienen insbesondere der Einführung von seitenständigen blockierten Isocanatgrupppen in die Polyurethanpräpolymeren (B1), wodurch auch noch ein Aufbau des Molekulargewichts der Polyurethanpräpolymeren (B 1) resultiert.

Vorzugsweise werden für die Herstellung der Polyurethanpräpolymere (B1) Diisocyanate sowie gegebenenfalls in untergeordneter Mengen Polyisocyanate zur Einführung von Verzweigungen verwendet. Im Rahmen der vorliegenden Erfindung sind unter untergeordneten Mengen Mengen zu verstehen, die kein Gelieren der Polyurethanpräpolymere (B1) bei ihrer Herstellung bewirken. Letzteres kann auch noch durch die Mitverwendung geringer Mengen an Monoisocyanaten verhindert werden.

Beispiele für geeignete Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Düsocyanatocyclohexan, 1,4- Diisocyanatocyclohexan, Dicyclohexylmethan-2,4'-diisocyanat, Trimethylendiisocyanat, Tetramethylendiisocyanat, Pentamethylendüsocyanat, Hexamethylendüsocyanat, Ethylethylendiisocyanat, Trimethylhexandüsocyanat, Heptanmethylendüsocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines transitrans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Toluylendiisocyanat, Xylylendiisocyanat, Bisphenylendiisocyanat, Naphthylendiisocyanat oder Diphenylmethandiisocyanat.

Beispiele geeigneter Polyisocyanate sind die Isocyanurate der vorstehend beschriebenen Diisocyanate.

Beispiele gut geeigneter Monoisocyanate sind Phenylisocyanat, Cyclohexylisocyanat oder Stearylisocyanat.

Die vorstehend beschriebenen Polyisocyanate können mit Vorteil für die Herstellung der Verbindungen (B1.1) verwendet werden.

Für die Herstellung der Polyurethanpräpolymere (B1) werden des weiteren
- gesättigte und ungesättigte höhermolekulare und niedermolekulare Polyole, insbesondere Diole und in untergeordneten Mengen Triole zur Einführung von Verzweigungen, sowie gegebenenfalls
- Verbindungen, durch welche hydrophile funktionelle Gruppen eingeführt werden,
- Polyamine und
- Aminolakohole
verwendet.

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeignete Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.-%, die auch als Dimerfettsäuren bezeichnet werden.

Geeignet sind auch die veresterungsiahigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen. Im Rahmen der vorliegenden Erfindung sind unter untergeordneten Mengen Mengen zu verstehen, die kein Gelieren der Polyesterpolyole bei ihrer Herstellung bewirken.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel IV oder V: 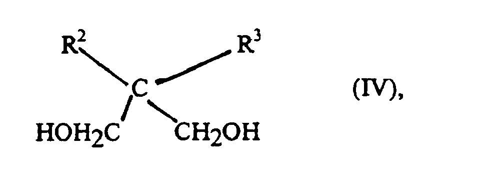 in der R² und R³ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R² und/oder R³ nicht Methyl sein darf; 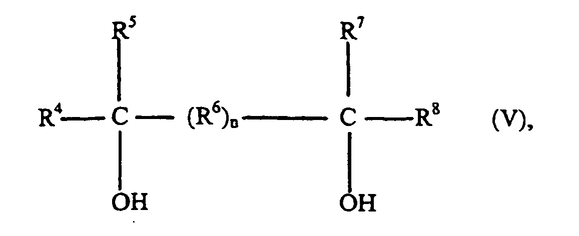 in der R⁴, R⁵, R⁷ und R⁸ jeweils gleiche oder verschiedene Reste darstellen und für einen Alkylrest mit 1 bis 6 C-Atomen, einen Cycloalkylrest oder einen Arylrest stehen und R⁶ einen Alkandiylrest mit 1 bis 6 C-Atomen, einen Arylenrest oder einen ungesättigten Alkendiylrest mit 1 bis 6 C-Atomen darstellt, und n entweder 0 oder 1 ist.

Als Diole IV der allgemeinen Formel IV sind alle Propandiole der Formel geeignet, bei denen entweder R² oder R³ oder R² und R³ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3 , 2-Butyl-2-propylpropandio 1-1,3 , 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole V der allgemeinen Formel V können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Die vorstehend genannten Diole können auch als solche für die Herstellung der Polyurethanpräpolymere (B1) eingesetzt werden.

Beispiele geeigneter Triole sind Trimethylolethan, Trimethylolpropan oder Glycerin, insbesondere Trimethylolpropan.

Die vorstehend genannten Triole können auch als solche für die Herstellung der Polyurethanpräpolymere (B1) eingesetzt werden (vgl. die Patentschrift EP-A-0 339433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, FettaLkohole, Allylalkohol oder PhenoL

Die Herstellung der Polyesterpolyole kann in Gegenwart geringer Mengen eines geeigneten Lösemittels als Schleppmittel durchgeführt werden. Als Schlepprnittel werden z. B. aromatische Kohlenwasserstoffe, wie insbesondere Xylol und (cyclo)aliphatische Kohlenwasserstoffe, z. B. Cyclohexan oder Methylcyclöhexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁹)ₘ- CH₂-O-)- aus. Hierbei ist der Index m bevorzugt 4 bis 6 und der Substitutent R⁹ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel H-(-O-(CHR¹⁰)ₒ-)ₚOH, wobei der Substituent R¹⁰ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt

Durch die Polyetherdiole können nichtionische hydrophile funktionelle Gruppen (b3) in die Hauptkette(n) der Polyurethanpräpolymeren (B1) eingeführt werden.

Die vorstehend beschriebenen niedermolekularen Polyole können mit Vorteil für die Herstellung der Verbindungen (B 1.1) verwendet werden.

Hydrophile Polyurethanpräpolymere (B1) enthalten entweder
(b1) hydrophile funktionelle Gruppen, die durch Neutralisanonsmittel und/oder Quatemisierungsmittel in Kationen überführt werden können, und/oder kationische Gruppen, insbesondere Ammoniumgruppen,
   oder
(b2) funktionelle Gruppen, die durch Neutralisationsmittel in Anionen überführt werden können, und/oder anionische Gruppen, insbesondere Carbonsäure- und/oder Carboxylatgruppen,
   und/oder
(b3) nichtionische hydrophile Gruppen, insbesondere Poly(alkylenether)-Gruppen.

Beispiele geeigneter erfindungsgemäß zu verwendender funktioneller Gruppen (b1), die durch Neutralisationsmittel und/oder Quatemisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (b1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder quaternäre Ammoniumgruppen, tertiäre Sulfoniumgruppen, insbesondere aber tertiäre Sulfoniumgruppen.

Beispiele geeigneter erfindungsgemäß zu verwendender funktioneller Gruppen (b2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (b2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (b1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (b2) sind Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Die Neutralisation kann in organischer Phase oder in wäßriger Phase erfolgen. Bevorzugt wird als Neutralisationsmittel Dimethylethanolamin und/oder Triethylamin eingesetzt.

Die Einführung von hydrophilen funktionellen (potentielle) kationischen Gruppen (b1) in die Polyurethanpräpolymere (B1) erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete gegenüber Isocyanatgruppen reaktive Gruppen sind die vorstehend beschriebenen, insbesondere Hydroxylgruppen sowie primäre und/oder sekundäre Aminogruppen, von denen die Hydroxylgruppen bevorzugt verwendet werden.

Beispiele geeigneter Verbindungen dieser Art sind 2,2-Dimethylolethyl- oder - propylamin, die mit einem Keton blockiert sind, wobei die resultierende Ketoximgruppe vor der Bildung der kationischen Gruppe (b1) wieder hydrolysiert wird, oder N,N-Dimethyl-, N,N-Diethyl- oder N-Methyl-N-ethyl-2,2-dimethylolethyl- oder -propylamin.

Die Einführung von hydrophilen funktionellen (potentiell) anionischen Gruppen (b2) in die Polyurethanpräpolymere (B1) erfolgt über den Einbau von Verbindungen, die mindestens eine gegenüber Isocyanatgruppen reaktive und mindestens eine zur Anionenbildung befähigte Gruppe im Molekül enthalten; die einzusetzende Menge kann aus der angestrebten. Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen.

Beispiele geeigneter Alkansäuren sind Dihydroxypropionsäure, Dihydroxybernteinsäure und Dihydroxybenzoesäure.

Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise 3,4-Diaminobenzoesäure, 2,4-Diaminotoluolsulfonsäure und 2,4-Diaminodiphenylethersulfonsäure.

Hydrophile funktionelle nichtionische Poly(oxyalkylen)gruppen (b3) können als laterale oder endständige Gruppen in die Polyurethanmoleküle eingeführt werden. Hierfür können neben den vorstehend beschriebenen Polyetherdiolen beispielsweise Alkoxypoly(oxyalkylen)alkohole mit der allgemeinen Formel R¹²O-(-CH₂-CHR¹³-O-)_{T} H in der R¹² für einen Alkylrest mit 1 bis 6 Kohlenstoffatomen, R¹³ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Die Auswahl der hydophilen funktionellen Gruppen (b1) oder (b2) ist so zu treffen, daß keine störenden Reaktionen, wie etwa Salzbildung oder Vernetzung mit den funktionellen Gruppen, die gegebenenfalls in den übrigen Bestandteilen des erfindungsgemäßen Polyurethans (B), des erfindungsgemäßen Pfropfmischpolymerisate, des erfindungsgemäßen Beschichtungsstoffs, der erfindungsgemäßen Dichtungsmasse oder des erfindungsgemäßen Klebstoffs vorliegen, möglich sind. Der Fachmann kann daher die Auswahl in einfacher Weise anhand seines Fachwissens treffen.

Von diesen hydrophilen funktionellen (potentiell) ionischen Gruppen (b1) und (b2) und den hydrophilen funktionellen nichtionischen Gruppen (b3) sind die (potentiell) anionischen Gruppen (b2) vorteilhaft und werden deshalb besonders bevorzugt verwendet.

Zur Herstellung der hydrophilen und der hydrophoben Polyurethanpräpolymeren (B1) können Polyamine und Aminoalkohole verwendet werden, die eine Molekulargewichtserhöhung der Polyurethanpräpolymeren (B1) bewirken. Wesentlich ist hierbei, daß die Polyamine und Aminoalkohole in einer Menge angewandt werden, daß noch freie Isocyanatgruppen im Molekül verbleiben.

Beispiele geeigneter Polyamine weisen mindestens zwei primäre und/oder sekundäre Aminogruppen auf. Polyamine sind im wesentlichen Allcylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfahige Wasserstoffatome haben. Beispiele sind Polyamine mit Linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetiamin, Dipropylendiamin und Dibutylentriamin. Als Beispiel für ein Monoamin ist Ethylhexylamin zu nennen (vg1. die Patentschrift EP-A- 0 089 497). Die Polyamine können auch mit Vorteil zur Herstellung der Verbindungen (B 1.1) verwendet werden.

Beispiele geeigneter Aminoalkohole sind Ethanolamin, Diethanolamin oder Triethanolamin. Die Aminoalkohole können auch mit Vorteil zur Herstellung der Verbindungen (B 1.1) verwendet werden.

Darüber hinaus können für die Herstellung der hydrophilen und hydrophoben Polyurethanpräpolymeren (B1) übliche und bekannte Verbindungen verwendet werden, durch die olefinisch ungesättigte Gruppen eingeführt werden. Bekanntermaßen enthalten solche Verbindungen mindestens zwei gegenüber Isocyanatgruppen reaktive funktionelle Gruppen, insbesondere Hydroxylgruppen, und mindestens eine olefinisch ungesättigte Gruppe. Beispiele geeigneter Verbindungen dieser Art sind aus den Patentschriften DE-C-197 22 862, DE-A-196 45 761, EP-A-0 522 419 oder EP-A-0 522 420 bekannt.

Für die Herstellung der erfindungsgemäßen Polyurethane (B) wird in einem zweiten Verfahrensschritt mindestens ein Addukt (B2) hergestellt.

Das erfindungsgemäß bevorzugt zu verwendende Addukt (B2) ist erhältlich, indem man mindestens ein Ethenylarylenmonoisocyanat mit mindestens einem Polyol, Polyamin und/oder mindestens einer mindestens eine Hydroxylgruppe und mindestens eine Aminogruppe enthaltenden Verbindung so umsetzt, daß mindestens eine isocyanatreaktive funktionelle Gruppe im Addukt (B2) verbleibt.

Dies bedeutet, daß man das Ethenylarylenmonoisocyanat mit
(i) Verbindungen mit zwei isocyanatreaktiven Gruppen, z. B. einem Diol, Diamin und/oder Alkanolamin, im Molverhältnis von 0,8 : 1 bis 1,2 : 1, insbesondere 1 : 1;
(ii) Verbindungen mit drei isocyanatreaktiven Gruppen, zum Beispiel einem Triol, Triamin, Alkanoldiamin, Dialkanolamin und/oder Trialkanolamin, im Molverhältnis von 0,8 : 1 bis 2,2 : 1, vorzugsweise 1 : 1 bis 2 : 1, insbesondere 1 : 1 oder 2 : 1, wobei Addukte (B2) resultieren, die eine oder zwei Ethenylarylengruppen enthalten; oder
(üi) Verbindungen mit vier isocyanatreaktiven Gruppen, z. B. einem Tetrol, Tetraamin, Alkanoltriamin, Dialkanoldiamin und/oder Trialkanolamin in Molverhältnis von 0,8 : 1 bis 3,2 : 1, vorzugsweise 1 : 1 bis 3 : 1, insbesondere 1:1,2: 1 oder 3 : 1, wobei Addukte (B2) resultieren, die 1 bis 3 Ethenylarylengruppen enthalten;
umsetzt.

Erfindungsgemäß bevorzugte Ethenylarylenmonoisocyanate sind solche der allgemeinen Formel I

**CH**_{**2**}**=C(R)-A-X-NCO** **(I),**

worin die Variablen die folgende Bedeutung haben:
- A =: substituierter oder unsubstituierter C₆-C₂₀-Arylenrest;
- R =: Wasserstoffatom, ein Halogenatom, eine Nitrilgruppe, eine substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest; und
- X =: zweibindiger organischer Rest.

Beispiele geeigneter Arylenreste A sind 1,2-, 1,3- oder 1,4-Phenylen, 1,2-, 1,3-, 1,4-, 1,5-, 1,6-, 1,7-, 1,8-, 2,3-, 2,4-, 2,5-, 2,6- oder 2,7-Naphthylen, 1,2'-, 1,3'-, 1,4'-, 2,2'-, 2,3'-, 2,4'- oder 2,5'-Biphenylylen oder 1,4-Phenanthrenylen, insbesondere 1,2-, 1,3- oder 1,4-Phenylen.

Von diesen sind die Phenylen, Naphthylen und Biphenylylenreste A von Vorteil und werden deshalb erfindungsgemäß bevorzugt verwendet. Besondere Vorteile bieten die Phenylenreste A, insbesondere der 1,3-Phenylenrest A, der demgemäß erfindungsgemäß ganz besonders bevorzugt verwendet wird.

Beispiele geeigneter Alkylreste R sind Methyl, Ethyl, Propyl, Isopropyl, n-Butyl, iso-Butyl, tert.-Butyl, Amyl, Hexyl, Heptyl, Octyl, 2-Ethylhexyl, Isooctyl, Nonyl, Decyl, Undecyl, Dodecyl, Tridecyl, Tetradecyl, Pentadecyl, Hexadecyl, Heptadecyl, Octadecyl, Nonadecyl oder Eicosanyl.

Beispiele geeigneter Cycloalkylreste R sind Cyclobutyl, Cyclopentyl, Cyclobutyl, Cyclopentyl, Cyclohexyl, Bicyclo[2.2.1]heptayl, Bicyclo[3.2.1]octyl oder Tricyclodecyl.

Beispiele geeigneter Alkylcycloalkylreste R sind Methylencyclohexan, Ethylencyclohexan oder Propan-1,3-diyl-cyclohexan.

Beispiele geeigneter Cycloalkylalkylreste R sind 2-, 3- oder 4-Methyl-, -Ethyl-, - Propyl- oder-Butylcyclohex-1-yl.

Beispiele geeigneter Arylreste R sind Phenyl, Naphthyl oder Biphenylyl.

Beispiele geeigneter Alkylarylreste R sind Benzyl-, Ethylen- oder Propan-1,3-diyl-benzol.

Beispiele geeigneter Cycloalkylarylreste R sind 2-, 3-, oder 4-Phenylcyclohex-1-yl.

Beispiele geeigneter Arylalkylreste R sind 2-, 3- oder 4-Methyl-, -Ethyl-, -Propyl- oder -Butylphen-1-yl.

Beispiele geeigneter Arylcycloalkykeste R sind 2-, 3- oder 4-Cyclohexylphen-1-yl.

Von diesen Resten R sind Wasserstoffatome und Alkylgruppen R, insbesondere Methylgruppen, von Vorteil und werden deshalb erfindungsgemäß bevorzugt verwendet. Von besonderem Vorteil hinsichtlich der Pfropfaktivität der Ethenylgruppe sind Methylgruppen, weswegen sie erfindungsgemäß ganz besonders bevorzugt verwendet werden.

Die vorstehend beschriebenen Reste A und R, sofern es sich nicht um Wasserstoffatome, Halogenatome oder Nitrilgruppen handelt, können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; und/ tertiäre Aminogruppen, insbesondere N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino. Die Auswahl geeigneter Substituenten ist so zu treffen, daß keine unerwünschte Wechselwirkung wie etwa eine Salzbildung oder eine Vernetzung mit den gegebenenfalls im erfindungsgemäßen Polyurethan (B) vorhandenen oder in den erfindungsgemäßen Pfropfmischpolymerisaten vorhandenen hydrophilen Gruppen eintreten kann. Der Fachmann kann daher geeignete Substituenten in einfacher Weise auswählen.

Erfindungsgemäß sind unsubstituierte Reste A und R von Vorteil und werden deshalb besonders bevorzugt verwendet.

In der allgemeinen Formel I steht die Variable X für einen zweibindigen organischen Rest, der sich bevorzugt von den folgenden Verbindungen ableitet:
(i) Substituierte und unsubstiuierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenylcycloalkene;
(ii) substituierte und unsubstituierte Aromaten oder Heteroamaten; sowie
(üi) Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstitiuierte Aromaten oder Heteroaromaten, deren Substituenten substituiert oder unsubstituiert sind und kein oder mindestens ein Heteroatom in ihrer Kette und/oder ihrem Ring enthalten;

Beispiele geeigneter Heteroatome sind Sauerstoff-, Stickstoff-, Bor-, Silizium-, Schwefel- oder Phosphoratome.

Beispiele geeigneter Substitutienten sind die vorstehend genannten Substituenten, für deren Auswahl das vorstehend Gesagte zu beachten ist.

Beispiele geeigneter Aromaten sind Benzol und Naphthalin.

Beispiele geeigneter Heteroaromaten sind Thiophen, Pyridin oder Triazin.

Beispiele geeigneter Alkane sind verzweigte oder unverzweigte Alkane vorzugsweise mit 1 bis 10, insbesondere 3 bis 6 C-Atomen im Molekül wie Methan Ethan, Propan, Butan, Isobutan, Pentan, Neopentan, Hexan, Heptan, Octan, Isooctan, Nonan, oder Dececan.

Beispiele geeigneter Alkene sind Ethylen und Propylen.

Beispiele geeigneter Cycloalkane sind Cyclopentan und Cyclohexan.

Beispiele geeigneter Cycloalkene sind Cyclopenten und Cyclohexen.

Beispiele geeigneter Alkylcycloalkane sind Methylcyclopentan und Methylcyclohexan.

Beispiele geeigneter Alkylcycloalkene sind Methylcyclopenten und Methylcyclohexen.

Beispiele geeigneter Alkenylcycloalkane sind Allyl- und Vinylcyclopentan und Allyl- und Vinylcyclohexan.

Beispiele geeigneter Alkenylcycloalkene sind Vinylcyclopenten und Vinylcyclohexen.

Beispiele geeigneter Alkyl-, Alkenyl-, Cycloalkyl-, Cycloalkenyl-, Alkylcyloalkyl-, Alkylcycloalkenyl-, Alkenylcycloalkyl- oder Alkenylcycloallcenylsubstituenten sind Methyl, Ethyl, Propyl, Isopropyl, n-Butyl, sec.-Butyl, tert.-Butyl, Vinyl, Allyl, Cyclohexyl, Cyclohexenyl, 4-Methylcyclohexyl, 4-Methylcyclohexenyl, 3-Aflylcyclohexenyl oder 4-Vinylcyclohexenyl.

Vorzugsweise leiten sich die Reste X von organischen Verbindungen ab, die als solche unsubstituiert sind oder deren Substituenten unsubstituiert sind.

Besonders bevorzugt sind die Reste X Alkandiylreste mit 3 bis 6 Kohlenstoffatomen im Molekül, insbesondere der Alkandiylrest -C(CH₃)₂- ist.

Von den Ethenylarylenmonoisocyanaten I weist 1-(1-Isocyanato-1-methylethyl)-3-(1-methylethenyl)-benzol hinsichtlich der Umsetzung zu dem gewünschten Addukt (B2) und hinsichtlich der Pfropfaktivität der erfindungsgemäßen Polyurethane (B) ganz besondere Vorteile auf und wird deshalb erfindungsgemäß ganz besonders bevorzugt verwendet. 1-(1-Isocyanato-1-methylethyl)-3-(1-methylethenyl)-benzol ist eine bekannte Verbindung und ist unter der Marke TMI® von der Firma CYTEC erhältlich.

Beispiele geeigneter Polyole, Polyamine sowie Verbindungen, die mindestens eine Hydroxylgruppe und mindestens eine Aminogruppe enthalten, sind die vorstehend bei der Beschreibung des Polyurethanpräpolymeren (B1) beschriebenen Verbindungen sowie die noch höherfunktionellen Polyole Pentaerythrit oder Homopentaerythrit oder Zuckeralkohole wie Threit, Erythrit, Arabit, Adonit, Xylit, Sorbit, Mannit oder Dulcit.

Von diesen Verbindungen bieten Ethanolamin und Diethanolamin ganz besondere Vorteile und werden deshalb erfindungsgemäß ganz besonders bevorzugt verwendet. Hierbei resultiert bei der Verwendung von Ethanolamin ein Addukt (B2), das eine isocyanatreaktive funktionelle Gruppe und eine Urethangruppe oder eine Harnstoffgruppe enthält (Variante i). Bei der Verwendung von Diethanolamin in Molverhältnis 1 : 1 resultiert ein Addukt (B2), das zwei isocyanatreaktive funktionelle Gruppen und eine Urethangruppe oder eine Harnstoffgruppe enthält (Variante ii). Dieses difunktionelle Addukt (B2) ist hervorragend für die Herstellung seitenständiger Ethenylarylengruppen geeignet. Gleichzeitig kann dadurch ein Molekulargewichtsaufbau der erfindungsgemäßen Polyurethane (B) erzielt werden.

Die Herstellung der erfindungsgemäß zu verwendenden Addukte (B2) weist keine methodischen Besonderheiten auf, sondern erfolgt durch die Umsetzung der vorstehend beschriebenen Ausgangsprodukte in einem inerten organischen Medium, vorzugsweise in polaren organischen Lösemitteln wie Ketonen, insbesondere Methylethylketon, oder Amiden, insbesondere N-Methylpyrrolidon, die keine funktionellen Gruppen aufweisen, die mit Isocyanatgruppen reagieren. Wesentlich ist, daß die Umsetzung so lange erfolgt, bis keine freien Isocyanatgruppen im Reaktionsgemisch mehr nachweisbar sind.

Die Herstellung der erfindungsgemäßen Polyurethane (B) aus den vorstehend beschriebenen Polyurethanpräpolymeren (B1) und den Addukten (B2) weist gleichfalls keine methodischen Besonderheiten auf, sondern erfolgt in Masse oder in einem inerten organischen Medium, vorzugsweise in einem inerten organischen Medium, wobei die vorstehend beschriebenen polaren organischen Lösemittel bevorzugt angewandt werden. Wesentlich ist, daß die Umsetzung so lange erfolgt, bis der Gehalts an freien Isocyanatgruppen konstant ist oder bis keine freien Isocyanatgruppen im Reaktionsgemisch mehr nachweisbar sind. Sollten noch freie Isocyanatgruppen vorhanden sein, werden sie erfindungsgemäß mit den vorstehend beschriebenen Blockierungsmitteln blockiert, wobei auch hier die Ketoxime xiii) bevorzugt verwendet werden.

Der Gehalt der erfindungsgemäßen Polyurethane (B) an Ethenylarylengruppen kann sehr breit variieren. Vorzugsweise liegt er bei 0,01 bis 30, bevorzugt 0,1 bis 25, besonders bevorzugt 0,2 bis 20, ganz besonders bevorzugt 0,25 bis 15 und insbesondere 0,3 bis 10 Gew.-%, jeweils bezogen auf das erfindungsgemäße Polyurethan (B).

Ebenso kann der Gehalt der erfindungsgemäßen Polyurethane (B) an blockierten Isocyanatgruppen sehr breit variieren. Vorzugsweise liegt er bei 0,01 bis 30, bevorzugt 0,1 bis 25, besonders bevorzugt 0,2 bis 20, ganz besonders bevorzugt 0,25 bis 15 und insbesondere 0,3 bis 10 Gew.-%, jeweils bezogen auf das erfindungsgemäße Polyurethan (B).

Besonders vorteilhafte hydrophile oder hydrophobe erfindungsgemäße Polyurethane (B) enthalten hierbei im statistischen Mittel
- mindestens eine, vorzugsweise 1 bis 2 und insbesondere 1 bis 3 seitenständige,
- mindestens eine, vorzugsweise 1 bis 2 und insbesondere 1 bis 3 endständige oder
- mindestens eine seitenständige und mindestens eine endständige, vorzugsweise 1 bis 2 seitenständige und 1 bis 2 endständige,
blockierte Isocyanatgruppen im Molekül.

Besonders vorteilhafte hydrophile oder hydrophobe erfindungsgemäße Polyurethane (B) enthalten hierbei im statistischen Mittel
- mindestens eine, vorzugsweise 1 bis 2 und insbesondere 1 bis 3 seitenständige,
- mindestens eine, vorzugsweise 1 bis 2 und insbesondere 1 bis 3 endständige oder
- mindestens eine seitenständige und mindestens eine endständige, vorzugsweise 1 bis 2 seitenständige und 1 bis 2 endständige,

Ethenylarylengruppen der allgemeinen Formel II pro Molekül:

**CH**_{**2**}**=C(R)-A-** (II).

In der allgemeinen Formel II haben die Variablen R und A die vorstehend im Detail angegebene Bedeutung.

Die Ethenylarylengruppen der allgemeinen Formel II sind erfindungsgemäß über einen verknüpfenden Rest III mit der Polyurethanhauptkette verbunden. Bei dem verknüpfenden Rest III handelt es sich um einen zweibindigen oder dreibindigen Rest.

Beispiele gut geeigneter verknüpfender Reste III sind solche der allgemeinen Formel IIIa bis IIIc:

**-X-NH-C(O)-O-** (IIIa),

**-X-NH-C(O)-NH-** (IIIb)

oder

**-X-NH-C(O)-N<** ( IIIc).

Hierin hat die Variable X die vorstehend bei der allgemeinen Formel I im Detail angegebene Bedeutung. Hierbei dient der verknüpfende Rest IIIc besonders bevorzugt der Verknüpfung der seitenständigen Ethenylarylengruppen I mit der Polymerhauptkette, wobei das tertiäre Stickstoffatom Bestandteil der Polymerhauptkette ist.

Die erfindungsgemäßen Polyurethane (B) können als solche für die Herstellung von Beschichtungsstoffen, insbesondere Lacken, Klebstoffen und Dichtungsmassen verwendet werden.

Handelt es sich um hydrophile erfindungsgemäße Polyurethane (B) ist es erfindungsgemäß von Vorteil, sie in der Form einer Dispersionen in einem wäßrigem Medium zu verwenden. Das wäßrige Medium enthält im wesentlichen Wasser. Hierbei kann das wäßrige Medium in untergeordneten Mengen organische Lösemittel, Neutralisationsmittel, Vernetzungsmittel und/oder lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Zum Zweck der Dispergierung werden die hydrophilen erfindungsgemäßen Polyurethane (B), die die vorstehend beschriebenen (potentiell) ionischen hydrophilen funktionellen Gruppen (b1) oder (b2) enthalten, mit mindestens einem der vorstehend beschriebenen Neutralisationsmittel neutralisiert und hiernach dispergiert. Bei den hydrophilen erfindungsgemäßen Polyurethanen (B), die nur die nichtionischen hydrophilen funktionellen Gruppen (b3) enthalten, erübrigt sich die Anwendung von Neutralisationsmitteln.

Die resultierenden erfindungsgemäßen Polyurethandispersionen (B) sind ebenfalls hervorragend für die Herstellung wäßriger Beschichtungsstoffe, Klebstoffe und Dichtungsmassen geeignet. Insbesondere sind sie für die Herstellung der erfindungsgemäßen Pfropfmischpolymerisate geeignet.

Die erfindungsgemäßen Pfropfmischpolymerisate sind nach einer ersten vorteilhaften Variante herstellbar, indem man mindestens ein erfindungsgemäßes hydrophiles Polyurethan (B) in einem wäßrigen Medium dispergiert, wonach man eine Mischung aus mindestens einem Monomer (a1) mit mindestens einer isocyanatreaktiven funktionellen Gruppe und mindestens einem hiermit copolymerisierbaren Monomer (a2) in seiner Gegenwart in Emulsion radikalisch (co)polymerisiert.

Nach einer zweiten vorteilhaften Variante sind die erfindungsgemäßen Pfropfmischpolymerisate herstellbar, indem man mindestens ein hydrophobes erfindungsgemäßes Polyurethan (B) in einem wäßrigen Medium dispergiert. Vorteilhafterweise wird dies in einem starken Scherfeld durchgeführt. Methodisch gesehen weist dieses Verfahren keine Besonderheiten auf, sondern kann beispielsweise nach den in der europäischen Patentanmeldung EP-A-0 401 565 beschriebenen Dispergierverfahren erfolgen. Hiernach wird eine Mischung aus mindestens einem Monomer (a1) mit mindestens einer isocyanatreaktiven funktionellen Gruppe und mindestens einem hiermit copolymerisierbaren Monomer (a2) in der Gegenwart des dispergierten erfindungsgemätien Polyurethans (B) in Emulsion radikalisch (co)polymerisiert. Erfindungsgemäß ist es für diese Variante von Vorteil, wenn das Monomer (a2) mindestens eine der vorstehend beschriebenen hydrophilen funktionellen Gruppen enthält. Hinsichtlich der Auswahl der hydrophilen funktionellen Gruppen gilt das vorstehend Gesagte.

Als isocyanatreaktive funktionelle Gruppen werden vorzugsweise die vorstehend beschriebenen verwendet.

Beispiele für Monomere (a1), die für die Herstellung der erfindungsgemäßen Pfropfmischpolymerisate geeignet sind, sind:
- Hydroxyalkylester der Acrylsäure, Methacrylsäure einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure oder Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat oder -crotonat; 1,4-Bis(hydroxymethyl)cyclohexan-, Octahydro-4,7-methano-1H-indendimethanol- oder Methylpropandiolmonoacrylat, -monomethacrylat, -monoethacrylat oder -monocrotonat; oder Umsetzungsprodukte aus cyclischen Estern, wie z.B. epsilon-Caprolacton und diesen Hydroxyalkylestern;
- olefinisch ungesättigte Alkohole wie Allylalkohol, 4-Hydroxybutylvinylether oder Polyole wie Trimethylolpropanmono- oder -diallylether oder -divinylether oder Pentaerythritmono-, -di- oder -triallylether oder -di- oder -trivinylether;
- Umsetzungsprodukt aus Acrylsäure und/oder Methacrylsäure mit dem Glycidylester einer in alpha-Stellung verzweigten Monocarbonsäure mit 5 bis 18 C-Atomen je Molekül. Die Umsetzung der Acryl-oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versatic®-Säure eingesetzt. Dieser Glycidylester ist unter dem Namen Cardura® E 10 im Handel erhältlich. Ergänzend wird auf Römpp Lexikon Lacke und Druckfarben, Georg Thieme Verlag, Stuttgart, New York, 1998, Seiten 605 und 606, verwiesen;
- (Meth)Acrylsäureamide wie (Meth)Acrylsäureamid, N-Methyl-, N-Ethyl-, N-Propyl-, N-Butyl-, N-Cyclohexyl-, N-Methylol-, N,N-Dimethylol-, N-Methoxymethyl- und/oder N-Methoxybutyl-(meth)acrylsäureamid; diese Monomeren können auch als hydrophile funktionelle Gruppen enthaltende Monomerer (a2) verwendet werden. Zu diesem Zweck werden sie mit den vorstehend beschriebenen Neutralisationsmitteln neutralisiert oder mit Quaternisierungsmitteln umgesetzt.

Die vorstehend genannten höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren (a1) solche Mengen zu verstehen, welche nicht zur Vernetzung oder Gelierung der aufgepfropften (Meth)Acrylatcopolymerisate (A) führen. So kann der Anteil an Trimethylolpropanmonoallylether 2 bis 10 Gew.-%, bezogen auf das Gesamtgewicht der zur Herstellung des (Meth)Acrylatcopolymerisats (A) eingesetzten Monomeren (a1) und (a2) betragen.

Beispiele für Monomere (a2), die für die Herstellung der erfindungsgemäßen Pfropfmischpolymerisate geeignet sind, sind:
- (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobomyl-, Dicyclopentadienyl-, Octahydro-4,7-methano-1 H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der Polyacrylatharze führen.
- Mindestens eine Säuregruppe, vorzugsweise eine Carboxylgruppe, pro Molekül tragende ethylenisch ungesättigte Monomer oder ein Gemisch aus solchen Monomeren. Besonders bevorzugt werden Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren oder deren Teilester verwendet werden. Desweiteren kommen Maleinsäuremono(meth)acryloyloxyethylester, Bernsteinsäuremono(meth)acryloyloxyethylester und Phthalsäuremono(meth)acryloyloxyethylester in Betracht.
- Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Düsobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.
- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
- Epoxidgruppen enthaltende Monomere wie die Glycidylester der Acrylsäure, Methacrylsäure, Ethacrylsäure, Crotonsäure, Maleinsäure, Fumarsäure und/oder Itaconsäure;
- vinylaromatische Kohlenwasserstoffe, wie Styrol, alpha-Alkylstyrole, insbesondere alpha-Methylstyrol, Arylstyrole, insbesondere Diphenylethylen, und/oder Vinyltoluol;
- Nitrile wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure.
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Aus diesen vorstehend beispielhaft beschriebenen geeigneten Monomeren (a1) und (a2) kann der Fachmann die für den jeweiligen Verwendungszweck besonders gut geeigneten hydrophilen oder hydrophoben Monomeren (a1) und (a2) anhand ihrer bekannten physikalisch chemischen Eigenschaften und Reaktivitäten leicht auswählen. Gegebenenfalls kann er zu diesem Zwecke einige wenige orientierende Vorversuche durchführen. Insbesondere wird er hierbei darauf achten, daß die Monomeren (a1) oder (a2) keine funktionellen Gruppen, insbesondere (potentiell) ionische funktionelle Gruppen, enthalten, die mit anderen (potentiell) ionischen funktionellen Gruppen, die beispielsweise in den hydrophilen erfindungsgemäßen Polyurethanen (B) vorhanden sind, unerwünschte Wechselwirkungen eingehen.

Erfindungsgemäß resultieren besondere Vorteile, wenn die Monomeren (a1) und (a2) so ausgewählt werden, daß das Eigenschaftsprofil der aufgepfropften (Co)Polymerisate im wesentlichen von den vorstehend beschriebenen hydrophilen oder hydrophoben (Meth)Acrylatmonomeren (a1) und (a2) bestimmt wird, wobei die anderen Monomeren (a1) und (a2) dieses Eigenschaftsprofil in vorteilhafter Weise breit variieren.

Methodisch gesehen weist die Herstellung der erfindungsgemäßen Pfropfmischpolymerisate keine Besonderheiten auf, sondern erfolgt nach den üblichen und bekannten Methoden der radikalischen Emulsionspolymerisation in Gegenwart mindestens eines Polymerisationsinitiators, so wie sie beispielsweise in den Patentschriften DE-C-197 22 862, DE-A-196 45 761, EP-A-0 522 419 oder EP-A-0 522 420 beschrieben wird.

Hierbei können die Monomeren (a1) und (a2) auch mit Hilfe eines Teils einer erfindungsgemäßen Polyurethandispersion (B) und Wasser in eine Präemulsion gebracht werden, die dann langsam einer Vorlage zudosiert wird, worin die eigentliche Emulsionspolymerisation abläuft

Beispiele geeigneter Polymerisationsinitiatoren sind freie Radikale bildende Initiatoren wie Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Bevorzugt werden wasserunlösliche Initiatoren verwendet. Die Initiatoren werden bevorzugt in einer Menge von 0,1 bis 25 Gew.-%, besonders bevorzugt von 0.75 bis 10 Gew.%, bezogen auf das Gesamtgewicht der Monomeren (a1) und (a2), eingesetzt.

In den wäßrigen Emulsionen werden dann die Monomeren (a1) und (a2) mit Hilfe der vorstehend genannten radikalbildenden Initiatoren bei Temperaturen von 0 bis 95°C, vorzugsweise 40 bis 95 °C, und bei Verwendung von Redoxsystemen bei Temperaturen von 30 bis 70 °C polymerisiert. Bei Arbeiten unter Überdruck kann die Polymerisation auch bei Temperaturen oberhalb 100 °C durchgeführt werden.

Es ist bevorzugt, daß mit dem Initiatorzulauf einige Zeit, im allgemeinen ca. 1 bis 15 Minuten, vor dem Zulauf der Monomeren (a1) und (a2) begonnen wird. Ferner ist ein Verfahren bevorzugt, bei dem die Initiatorzugabe zum gleichen Zeitpunkt wie die Zugabe der Monomeren (a1) und (a2) begonnen und etwa eine halbe Stunde, nachdem die Zugabe der Monomeren (a1) und (a2) beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomeren (a1) und (a2) im wesentlichen vollständig umgesetzt worden sind. "Im wesentlichen vollständig umgesetzt" soll bedeuten, daß vorzugsweise 100 Gew.-% der eingesetzten Monomeren (a1) und (a2) umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Als Reaktoren für die Pfropfmischpolymerisation kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, in Betracht.

In den erfindungsgemäßen Pfropfinischpolymerisaten kann das Mengenverhältnis von Kern zu Schale außerordentlich breit variieren, was ein besonderer Vorteil der erfindungsgemäßen Pfropfmischpolymerisate ist. Vorzugsweise liegt dieses Verhältnis bei 1 : 100 bis 100 : 1, bevorzugt 1 : 50 bis 50 : 1, besonders bevorzugt 30 : 1 bis 1 : 30, ganz besonders bevorzugt 20 : 1 bis 1 : 20 und insbesondere 10 : 1 bis 1 : 10. Ganz besondere Vorteile resultieren, wenn dieses Verhältnis in etwa bei 3,5 : 1 bis 1 : 3,5, insbesondere 1,5 : 1 bis 1 : 1,5 liegt.

Bei der erfindungsgemäß bevorzugten Verwendung (potentiell) anionischer hydrophiler funktioneller Gruppen (b2), insbesondere von Carbonsäuregruppen, resultieren weitere besondere Vorteile, wenn in den erfindungsgemäßen Pfropfmischpolymerisaten das Verhältnis von Säurezahl der Schale zu Säurezahl des Kerns > 1, vorzugsweise > 3, bevorzugt > 5, besonders bevorzugt > 7, ganz besonders bevorzugt > 9 und insbesondere > 10 ist.

Die erfindungsgemäßen Pfropfmischpolymerisate können aus den Primärdispersionen, in denen sie anfallen, isoliert und den unterschiedlichsten Verwendungszwecken, insbesondere in lösemittelhaltigen, wasser- und lösemittelfreien pulverförmigen festen oder wasser- und lösemittelfreien flüssigen Beschichtungsstoffen, Klebstoffen und Dichtungsmassen, zugeführt werden. Erfindungsgemäß ist es indes von Vorteil, die Primärdispersionen als solche für die Herstellung von wäßrigen Beschichtungsstoffen, Klebstoffen und Dichtungsmassen zu verwenden.

Die erfindungsgemäßen wäßrigen Klebstoffe können außer den erfindungsgemäßen Polyurethanen (B) und den erfindungsgemäßen Pfropfmischpolymerisaten weitere geeignete übliche und bekannte Bestandteile in wirksamen Mengen enthalten. Beispiele geeigneter Bestandteile sind die nachstehend beschriebenen Vernetzungsmittel und Additive, soweit sie für die Herstellung von Klebstoffen in Betracht kommen.

Die erfindungsgemäßen wäßrigen Dichtungsmassen können ebenfalls außer den erfindungsgemäßen Polyurethanen (B) und den erfindungsgemäßen Pfropfinischpolymerisaten weitere geeignete übliche und bekannte Bestandteile in wirksamen Mengen enthalten. Beispiele geeigneter Bestandteile sind ebenfalls die nachstehend beschriebenen Vernetzungsmittel und Additive, soweit sie für die Herstellung von Dichtungsmassen in Betracht kommen.

Die Primärdispersionen der erfindungsgemäßen Pfropfmischpolymerisate sind vor allem für die Herstellung der erfindungsgemäßen wäßrigen Beschichtungsstoffe, insbesondere der erfindungsgemäßen wäßrigen Lacke, geeignet. Beispiele für erfindungsgemäße wäßrige Lacke sind Füller, Unidecklacke, Wasserbasislacke und Klarlacke. Ganz besondere Vorteile entfalten die erfindungsgemäßen Primärdispersionen, wenn sie zur Herstellung der erfindungsgemäßen Wasserbasislacke verwendet werden.

In den erfindungsgemäßen Wasserbasislacken sind die Polyurethane (B) und/oder die erfindungsgemäßen Pfropfmischpolymerisate, insbesondere aber die erfindungsgemäßen Pfropfmischpolymerisate, vorteilhafterweise in einer Menge von 1,0 bis 50, bevorzugt 2,0 bis 40 und, besonders bevorzugt 3,0 bis 35, ganz besonders bevorzugt 4,0 bis 30 und insbesondere 5,0 bis 25 Gew.-%, jeweils bezogen auf das Gesamtgewicht des jeweiligen erfindungsgemäßen Wasserbasislacks, enthalten.

Der weitere wesentliche Bestandteil des erfindungsgemäßen Wasserbasislacks ist mindestens ein farb- und/oder effektgebendes Pigment. Die Pigmente können aus anorganischen oder organischen Verbindungen bestehen. Der erfindungsgemäße Wasserbasislack gewährleistet daher aufgrund dieser Vielzahl geeigneter Pigmente eine universelle Einsatzbreite und ermöglicht die Realisierung einer Vielzahl von Farbtönen und optischer Effekte.

Als Effektpigmente können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Der Anteil der Pigmente an dem erfindungsgemäßen Wasserbasislack kann außerordentlich breit variieren und richtet sich vor allem nach der Deckkraft der Pigmente, dem gewünschten Farbton und dem gewünschten optischen Effekt. Vorzugsweise sind die Pigmente in dem erfindungsgemäßen Wasserbasislack in einer Menge von 0,5 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogenen auf das Gesamtgewicht des erfindungsgemäßen Wasserbasislacks, enthalten. Dabei kann auch das Pigment/Bindemittel Verhältnis, d. h. das Verhältnis der Pigmente zu den erfindungsgemäßen Polyurethanen (B) und/oder zu den erfindungs gemäßen Pfropfinischpolymerisaten sowie sonstigen gegebenenfalls vorhandenen Bindemitteln, außerordentlich breit variieren. Vorzugsweise liegt dieses Verhältnis bei 6,0 : 1,0 bis 1,0 : 50, bevorzugt 5 : 1,0 bis 1,0 : 50, besonders bevorzugt 4,5 : 1,0 bis 1,0 : 40, ganz besonders bevorzugt 4 : 1,0 bis 1,0 : 30 und insbesondere 3,5 : 1,0 bis 1,0 : 25.

Diese Pigmente können auch über Pigmentpasten in die erfindungsgemäßen Wasserbasislacke eingearbeitet werden, wobei als Reibharze u.a. die erfindungs gemäßen Polyurethane (B) und/oder die erfindungsgemäßen Pfropfmischpolymerisate in Betracht kommen.

Der erfinduagsgemäBe Beschichtungsstoff, speziell des erfindungsgemäße Wasserbasislacks, kann gegebenenfalls mindestens ein Vernetzungsmittel enthalten.

Beispiele geeigneter Vernetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestem und Polyisocyanaten oder von Estern und Teilestern mehrwertiger Alkohole der Malonsäure mit Monoisocyanaten, wie sie der europäischen Patentschrift EP-A-0 596 460 beschrieben werden.

Derartige Vernetzungsmittel sind dem Fachmann gut bekannt und werden von zahlreichen Firmen als Verkaufsprodukte angeboten.

Sofern sie verwendet werden, werden die Vernetzungsmittel in den erfindungsgemäßen Wasserbasislacken in einer Menge von 0,1 bis 30, bevorzugt 0,3 bis 20, besonders bevorzugt 0,5 bis 10 und insbesondere 1,0 bis 8,0 Gew.-%, jeweils bezogen auf das Gesamtgewicht des jeweiligen erfindungsgemäßen Wasserbasislacks, angewandt.

Zusätzlich zu den vorstehend beschriebenen Bestandteilen kann der erfindungsgemäße Wasserbasislack übliche und bekannte Bindemittel und/oder Additive in wirksamen Mengen enthalten.

Beispiele üblicher und bekannter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE-A-197 36 535 beschriebenen, Polyester, insbesondere die in den Patentschriften DE-A-40 09 858 oder DE-A-44 37 535 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP-A-0 521 928, EP-A-0 522 420, EP-A-0 522 419, EP-A-0 730 613 oder DE-A-44 37 535 beschriebenen, oder Polyharnstoffe.

Beispiele geeigneter Additive sind
- organische und anorganische Füllstoffe wie Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; ergänzend wird auf Römpp Lexikon Lacke und Druckfarben, Georg Thieme Verlag, 1998, Seiten 250 ff., »Füllstoffe«, verwiesen;
- thermisch härtbare Reaktiverdünner wie stellungsisomere Diethyloctandiole oder Hydroxylgruppen enthaltende hyperverzweigte Verbindungen oder Dendrimere;
- niedrig siedende und/oder hochsiedende organische Lösemittel ("lange Lösemittel");
- UV-Absorber;
- Lichtschutzmittel wie HALS-Verbindungen, Benztriazole oder Oxalanilide;
- Radikalianger;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat oder mit Aminen blockierte organische Sulfonsäuren;
- Entlüftungsmittel wie Diazadicycloundecan;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Titandioxid, Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate, vorzugsweise Smektite, insbesondere Montmorillonite und Hectorite, wie Aluminium-Magnesium-Silikate, Natrium-Magnesium- und Natrium-Magnesium-Fluor-Lithium-Schichtsilikate des Montmorillonit-Typs oder anorganische Schichtsilikate wie Aluminium-Magnesium-Silikate, Natrium-Magnesium- und Natrium-Magnesium-Fluor-Lithium-Schichtsilikate des Montmorillonit-Typs (ergänzend wird auf das Buch von Johan Bielemann »Lackadditive«, Wiley-VCH, Weinheim, New York, 1998, Seiten17 bis 30, verwiesen); Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; und/oder
- Flammschutzmittel.

Weitere Beispiele geeigneter Lackadditive werden in dem Lehrbuch »Lackadditive« von Johan Bieleman, Wiley-VCH, Weinheim, New York, 1998, beschrieben.

Die erfindungsgemäßen Wasserbasislacke weisen bei Spritzviskosität vorzugsweise einen Festkörpergehalt von 5,0 bis 60, bevorzugt 10 bis 60, besonders bevorzugt 13 bis 60 und insbesondere 13 bis 55 Gew.-%, jeweils bezogen auf das Gesamtgewicht des jeweiligen erfindungsgemäßen Wasserbasislacks, auf.

Die Herstellung des erfindungsgemäßen Wasserbasislacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver oder Extruder nach den für die Herstellung der jeweiligen Wasserbasislacke geeigneten Verfahren.

Der erfindungsgemäße Wasserbasislack dient der Herstellung der erfindungsgemäßen Lackierungen, insbesondere Mehrschichtlackierungen, auf grundierten oder ungrundierten Substraten.

Als Substrate kommen alle zu lackierenden Oberflächen, die durch eine Härtung der hierauf befindlichen Lackierungen unter Anwendung von Hitze nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist die erfindungsgemäße Lackierung auch für Anwendungen außerhalb der Automobillackierung geeignet. Hierbei kommt sie insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Mehrschichtlackierung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die erfindungsgemäßen Mehrschichtlackierungen können in unterschiedlicher Weise hergestellt werden.

Eine erste bevorzugte Variante des erfindungsgemäßen Verfahrens umfaßt die Verfahrensschritte:
(I) Herstellen einer Basislackschicht durch Applikation des erfindungsgemäßen Wasserbasislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung und die Klarlackierung resultieren (Naß-in-naß-Verfahren).

Diese Variante bietet insbesondere bei der Lackierung von Kunststoffen besondere Vorteile und wird deshalb hier besonders bevorzugt angewandt.

Eine zweite bevorzugte Variante des erfindungsgemäßen Verfahrens umfaßt die Verfahrensschritte:
(I) Herstellen einer Füllerlackschicht durch Applikation eines Füllers auf das Substrat,
(II) Härtung der Füllerlackschicht, wodurch die Füllerschicht resultiert,
(III) Herstellen einer Basislackschicht durch Applikation des erfindungsgemäßen Wasserbasislacks auf die Füllerschicht,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackierung und die Klarlackierung resultieren (Naß-in-naß-Verfahren).

Eine dritte bevorzugte Variante des erfindungsgemäßen Verfahrens umfaßt die Verfahrensschritte:
(I) Herstellen einer Füllerlackschicht durch Applikation eines Füllers auf das Substrat,
(II) Trocknung der Füllerlackschicht,
(III) Herstellen einer Basislackschicht durch Applikation des erfindungsgemäßen Wasserbasislacks auf die Füllerlackschicht,
(IV) Trocknen der Basislackschicht,
(V) Herstellen einer Klarlackschicht durch Applikation eines Klarlacks auf die Basislackschicht und
(VI) gemeinsame Härtung der Füllerlackschicht, der Basislackschicht und der Klarlackschicht, wodurch der Füller, die Basislackierung und die Klarlackierung resultieren (erweitertes Naß-in-naß-Verfahren).

Die beiden letzgenannten Varianten bieten insbesondere bei der Lackierung von Automobilkarosserien besondere Vorteile und werden deshalb hier ganz besonders bevorzugt angewandt.

Hierbei zeigt sich als weiterer besonderer Vorteil des erfindungsgemäßen Wasserbasislacks und des erfindungsgemäßen Verfahrens, daß nämlich sämtliche üblichen und bekannten Klarlacke im Rahmen der erfindungsgemäßen Verfahren mit der erfindungsgemäßen Wasserbasislackschicht kombiniert werden können.

Beispiele geeigneter bekannter Einkomponenten(1K)-, Zweikomponenten(2K)- oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vg1. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vemetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542, der internationalen Patentanmeldung WO 96/32452 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Pulverslurrry-Klarlacke bieten für die erfmdungsgemäße Mehrschichtlackierung besondere Vorteile und werden deshalb erfindungsgemäß besonders bevorzugt verwendet.

Darüber hinaus können die Klarlackierungen noch zusätzlich mit mindestens einer weiteren Klarlackierung, beispielsweise einer organisch modifizierten Keramikschicht, beschichtet sein, wodurch die Kratzfestigkeit der erfindungsgemäßen Mehrschichtlackierung signifikant verbessert werden kann.

Demzufolge können die erfindungsgemäßen Mehrschichtlackierungen einen unterschiedlichen Aufbau aufweisen.

In einer ersten bevorzugten Variante der erfindungsgemäßen Mehrschichtlackierung liegen
(1) die farb- und/oder effektgebende Basislackierung und
(2) eine Klarlackierung
in der angegebenen Reihenfolge übereinander. Diese bevorzugte Variante wird insbesondere bei der Kunststofflackierung angewandt.

In der zweiten bevorzugten Variante der erfindungsgemäßen Mehrschichtlackierung liegen
(1) eine mechanische Energie absorbierende Füllerschicht,
(2) die farb- und/oder effektgebende Basislackierung und
(3) eine Klarlackierung
in der angegebenen Reihenfolge übereinander. Diese Variante wird insbesondere bei der Automobillackierung angewandt.

Die Applikation des erfindungsgemäßen Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikationen kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Wasserbasislack selbst, betrieben wird.

Im allgmeinen werden die Füllerlackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 10 bis 120, besonders bevorzugt 10 bis 100 und insbesondere 10 bis 90 µm, im Falle der Basislackierung liegt sie bei 5 bis 50, vorzugsweise 5 bis 40, besonders bevorzugt 5 bis 30 und insbesondere 10 bis 25 µm, und im Falle der Klarlackierungen liegt sie bei 10 bis 100, vorzugsweise 15 bis 80, besonders bevorzugt 20 bis 70 und insbesondere 25 bis 60 µm.

Die Füllerlackschicht, Basislackschicht und Klarlackschicht werden thermisch gehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 60 bis 100 °C und insbesondere 80 bis 100 ° C während einer Zeit von 1 min bis zu 2 h, besonders bevorzugt 2 min bis zu 1 h und insbesondere 3 min bis 45 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Im Falle der Klarlackierungen kann die Härtung je nach verwendetem Klarlack auch mit aktinischer Strahlung oder thermisch und mit aktinischer Strahlung (Dual Cure) erfolgen. Als aktinische Strahlung kommt elektromagnetische Strahlung wie nahes Infrarotlicht (NIR), sichtbares Licht, UV-Strahlung oder Röntgenstrahlung und/oder Korpuskularstrahlung wie Elektronenstrahlung in Betracht.

Die erfindungsgemäßen Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rißbildung (mudcracking) oder Verlaufsstörungen oder Oberflächenstrukturen in den Klarlackierungen auf.

Insbesondere weisen die erfindungsgemäße Mehrschichtlackierungen einen hervorragenden Metallic-Effekt, einen hervorragenden D.O.I. (distinctiveness of the reflected image) und eine hervorragende Oberflächenglätte, auf. Sie sind witterungsstabil, resistent gegenüber Chemikalien und Vogelkot und kratzfest und zeigen ein sehr gutes Reflow-Verhalten.

Nicht zuletzt erweist es sich aber als ganz besonderer Vorteil, daß durch die Verwendung der erfindungsgemäßen Wasserbasislacke bei der Herstellung der erfindungsgemäßen Mehrschichtlackierungen selbst dann keine Rißbildung oder Kocher mehr resultieren, wenn die Wasserbasislackschichten mit Pulverslurry-Klarlacken überschichtet und hiernach gemeinsam mit diesen eingebrannt werden. Hierdurch ist es möglich, die besonderen Vorteile von Wasserbasislacken mit den besonderen Vorteilen von Pulverslurry-Klarlacken zu kombinieren. Darüber hinaus erweisen sich gerade diese erfindungsgemäßen Mehrschichtlackierungen als besonders haftfest - und dies auch in ihrer Verwendung als Reparaturlackierungen.

Demzufolge weisen auch die hiermit beschichteten Substrate besondere Vorteile wie eine längere Gebrauchsdauer, einen besseren ästhetischen Eindruck beim Betrachter und eine bessere technologische Verwertbarkeit auf, was sie gerade in der Automobilserienlackierung wirtschaftlich besonders attraktiv macht.

### Beispiele und Vergleichsversuche

### Herstellbeispiel 1

### Die Herstellung eines erfindungsgemäß bevorzugt zu verwendenden Adduktes (B2)

In einem Reaktionsgefäß, ausgerüstet mit Rührer, Innenthermometer, Rückflußkühler und elektrischer Heizung, wurden 429 Gewichtsteile . Methylethylketon, 182 Gewichtsteile N-Methylpyrrolidon und 210 Gewichtsteile Diethanolamin bei 20 °C vorgelegt. Zu dieser Mischung wurden während eineinhalb Stunden 402 Gewichtsteile 1-(1-IsoCyanato-1-methylethyl)-3-(1-methylethenyl)-benzol (TMI® der Firma CYTEC) zugetropft, so daß die Reaktionstemperatur 40 °C nicht überschritt. Die resultierende Reaktionsmischung wurde so lange gerührt, bis keine freien Isocyanatgruppen mehr nachweisbar waren. Danach wurde sie mit 200 ppm Hydrochinon stabilisiert. Der Feststoffgehalt der Reaktionsmischung lag bei 50 Gew.-%.

### Herstellbeispiel 2

### Die Herstellung einer erfindungsgemäß zu verwendenden Verbindung (B1.1)

In einem Doppelmantelreaktionsgefäß mit Wärmeträgerölbeheizung, ausgestattet mit Rührer, Innenthermometer und Rückflußkühler, wurden 289,8 Gewichtsteile Methylethylketon, 124,2 Gewichtsteile N-Methylpyrrolidon und 222 Gewichtsteile Isophorondiisocyanat bei 20 °C vorgelegt. Unter starker Kühlung wurden während fünf Minuten 87 Gewichtsteile Methylethylketoxim zudosiert. Nach dem Abklingen der exothermen Reaktion wurden während zwei Minuten 105 Gewichtsteile Diethanolamin zu getropft. Anschließend wurde die resultierende Reaktionsmischung so lange gerührt, bis keine freien Isocyanatgruppen mehr nachweisbar waren.

### Beispiel 1

### Die Herstellung eines erfindungsgemäßen Polyurethans (B)

In einem Reaktionsgefäß, ausgerüstet mit Rührer, Innenthermometer, Rückflußkühler und elektrischer Heizung, wurden 685,2 Gewichtsteile eines linearen Polyesterpolyols (hergestellt aus dimerisierter Fettsäure (Pripol®1013), Isophthalsäure und Hexan-1,6-diol) mit einer Hydroxylzahl von 80 und einem zahlenmittleren Molekulargewicht von 1.400 Dalton und 108,2 Gewichtsteile Dimethylolpropionsäure in 394,4 Gewichtsteilen Methylethylketon und 87,9 Gewichtsteilen N-Methylpyrrolidon gelöst. Zu der resultierenden Lösung wurden 96,4 Gewichtsteile der Verbindung (B1.1) gemäß Herstellbeispiel 2 hinzugegeben. Die Reaktionsmischung wurde auf 45 °C erwärmt, wonach 377,3 Gewichtsteile Isophorondiisocyanat hinzugegeben wurden. Nach dem Abklingen der exothermen Reaktion wurde die Reaktionsmischung unter Rühren langsam auf 80 °C erwärmt. Es wurde bei dieser Temperatur weiter gerührt, bis der Gehalt an freien Isocyanatgruppen bei 0,65 bis 0,8 Gew.-% lag und konstant war, wodurch das Präpolymer B1 resultierte. Danach wurde die Reaktionsmischung auf 70 °C abgekühlt, und es wurden 121,3 Gewichtsteile des Adduktes (B2) gemäß Herstellbeispiel 1 hinzugegeben. Die resultierende Reaktionsmischung wurde so lange bei 70 °C gerührt, bis der Gehalt an freien Isocyanatgruppen bei 0,18 bis 0,25 Gew.-% lag und konstant war. Hiernach wurden 1,8 Gewichtsteile Methylethylketoxim hinzugegeben, und resultierende Reaktionsmischung wurde so lange bei 70 °C gerührt, bis keiner freien Isocyanatgruppen mehr nachweisbar waren. Das resultierende gelöste Polyurethan (B) wurde bei 60 °C 150 Gewichtsteilen Methoxypropanol und 62,5 Gewichtsteilen Triethylamin versetzt. 30 Minuten nach der Aminzugabe wurden während 30 Minuten 2.222 Gewichtsteile deionisiertes Wasser unter Rühren hinzugegeben wurden. Aus der resultierenden Dispersion wurde das Methylethylketon bei 60 °C unter Vakuum abdestilliert. Hiernach wurden eventuelle Lösemittel- und Wasserverluste ausgeglichen. Die so erhaltene Dispersion des erfindungsgemäßen Polyurethans (B) wies einen Feststoffgehalt von 33, 0 Gew.-% (eine Stunde bei 130 °C), einen pH-Wert 7,3 und einer Säurezahl von 37,2 mg KOH/g auf.

### Beispiel 2

### Die Herstellung der Primärdispersion eines erfindungsgemäßen Pfropfmischpolymerisats

1.856,1 Gewichtsteile der Polyurethandispersion (B) gemäß Beispiel 1 wurden mit 887,5 Gewichtsteilen deionisiertem Wasser verdünnt und auf 85 °C erhitzt. Bei dieser Temperatur wurde der Dispersion unter Rühren ein Gemisch aus 175,2 Gewichtsteilen Styrol, 175,2 Gewichtsteilen Methylmethacrylat, 131,1 Gewichtsteilen n-Butylacrylat und 131,1 Gewichtsteilen Hydroxyethylmethacrylat während 3,5 Stunden gleichmäßig zugegeben. Mit Beginn der Zugabe der Monomerenmischung wurde eine Lösung von 9,2 Gewichtsteilen tert.-Butylperoxyethylhexanoat in 134,8 Gewichtsteilen Methoxypropanol innerhalb von 3,75 Stunden zugegeben. Die resultierende Reaktionsmischung wurde bei 85 °C so lange weiter gerührt, bis alle Monomeren abreagiert waren,wobei geringen Mengen an Initiator nachdosiert wurden. Das Gewichtsverhältnis von Polyurethan (B) zu Methacrylatcopolymerisat (A) lag bei 1 : 1. Die resultierende Primärdispersion des Pfropfmischpolymerisats 1 wies eine sehr gute Lagerstabilität auf. Ihr Feststoffgehalt lag bei 35,5 Gew.-% (eine Stunde bei 130 °C) und ihr pH-Wert bei 7,3.

### Vergleichsversuch V1

### Die Herstellung eines bekannten Ethenylarylengruppen enthaltenden Polyurethans

Ein hydroxylgruppenhaltiger Polyester wurde gemäß der in der Patentschrift EP-A-0 608 021, Seite 6, Zeilen 22 bis 37 (intermediate A), angegebenen Vorschrift hergestellt. Hierzu wurde in einem geeigneten Reaktionsgefäß ein Gemisch aus 236 Gewichtsteilen Hexan-1,6-diol, 208 Gewichtsteilen Neopentylglykol, 616 Gewichtsteilen Hexahydrophthalsäureanhydrid und 6 Gewichtsteilen Benzyltriphenylphosphoniumchlorid vorgelegt und unter Stickstoff unter Rühren auf 120 °C erhitzt. Nach einer Stunde bei dieser Temperatur wurde die Reaktionsmischung auf 140 °C erhitzt. Hiernach wurden während zwei Stunden 1.000 Gewichtsteile des Glycidylesters von 1,1-Dimethyl-1-heptancarbonsäure (Cardura® E-10 der Firma Shell) zudosiert. Nach vier Stunden wies die Reaktionsmischung eine Säurezahl von 8,5 mg KOH/g auf. Es wurden noch einmal 80 Gewichtsteile Cardura® E-10 hinzugegeben. Nach weiteren zwei Stunden lag die Säurezahl der Reaktionsmischung unter 1 mg KOH/g.

Nach der auf Seite 7, Zeilen 1 bis 27 (Example I), der Patentschrift EP-A-0 608 021 angegebenen Vorschrift wurden 261,6 Gewichtsteile des vorstehend beschriebenen Polyesters, 55 Gewichtsteile N-Methylpyrrolidon und 0,1 Gewichtsteile Dibutylzinndiacetat vorgelegt. Zu dieser Mischung wurden während einer Stunde bei 90 °C 72,1 Gewichtsteile Isophorondiisocyanat zudosiert. Nach zwei Stunden bei 90 °C wurde die Reaktionsmischung auf 100 °C erhitzt. Bei dieser Temperatur wurden 16,3 Gewichtsteile TMI® während 15 Minuten hinzudosiert. Die resultierende Reaktionsmischung wurde während einer Stunde bei hundert °C gehalten.

Hiernach wurde die Reaktionsmischung auf 130 °C erhitzt, und es wurde bei dieser Temperatur unter Rühren und unter Stickstoff während einer Stunde eine Mischung aus 38,2 Gewichtsteilen Styrol, 9,2 Gewichtsteilen Methylmethacrylat, 33,1 Gewichtsteilen Acrylsäure, 66. Gewichtsteilen Cardura® E-10, 2,7 Gewichtsteilen Dicumylperoxid, 0,8 Gewichtsteilen 3-Mercaptopropionsäure und 51,9 Gewichtsteilen 2-Butoxyethanol hinzugegeben. Die resultierende Reaktionsmischung wurde während drei Stunden bei dieser Temperatur gehalten. Danach wurden bei 115 °C 18,1 Gewichtsteile Dimethylethanolamin zudosiert. Nach dem Abkühlen auf 90 °C wurden 782 Gewichtsteile deionisiertes Wasser unter Rühren während drei Stunden tropfenweise zudosiert, wodurch eine Sekundärdispersion mit einem Feststoffgehalt von 35,8 Gew.-% resultierte.

### Beispiel 3 und Vergleichsversuche V2 und V3

### Die Herstellung eines erfindungsgemäßen Wasserbasislacks (Beispiel 3) und nicht erfindungsgemäßer Wasserbasislacke (Vergleichsversuche V2 und V3)

Für das erfindungsgemäße Beispiel 3 wurden in einem Mischgefäß 9,5 Gewichtsteile deionisiertes Wasser vorgelegt. Unter Rühren wurden 10,5 Gewichtsteile einer wäßrigen Acrylatdispersion [Komponente (i) gemäß der Patentschrift DE-A-197 36 535; Acronal® 290 D der Firma BASF Aktiengesellschaft], 13,5 Gewichtsteile der erfindungsgemäßen Primärdispersion gemäß Beispiel 2, 10,4 Gewichtsteile des Verdickungsmittels 1 (Paste eines synthetischen Natrium-Magnesium-Schichtsilikats der Firma Laporte, 3%ig in Wasser), 8,0 Gewichtsteile deionisiertes Wasser, 0,28 Gewichtsteile einer 15 %igen wäßrigen Ammoniaklösung und 18,0 Gewichtsteile des Verdickungsmittels 2 (3%ige wäßrige Lösung eines Polyacrylsäureverdickers der Firma Allied Colloids) zugegeben.

Anschließend wurden unter Rühren 4,2 Gewichtsteile einer Pigmentpaste mit einem Rußgehalt von 10 Gew.-% und einem Gehalt an der acrylierten Polyurethandispersion gemäß dem Beispiel D der Patentschrift DE-A-44 37 535 von 60 Gew.-%, 10,2 Gewichtsteile einer Füllstoffpaste mit einem Aerosilgehalt von 10 Gew.-% und einem Gehalt an deracrylierten Polyurethandispersion gemäß dem Beispiel D der Patentschrift DE-A-44 37 535 von 50 Gew.-%, 2,0 Gewichtsteile Butylglykol und 3,5 Gewichtsteile eines mit Methanol und Butanol veretherten Melaminharzes der Firma CYTEC hinzugefugt.

In einem separaten Mischgefäß wurde eine Mischung aus 0,4 Gewichtsteilen einer handelsüblichen Aluminiumbronze (Alu-Stapa Hydrolux® der Firma Eckart, Al-Gehalt 65 Gew.-%) und 0,6 Gewichtsteilen Butylglykol verrührt. Anschließend wurde diese Mischung der anderen Mischung unter starkem Rühren portionsweise hinzugefügt.

In einem weiteren separaten Mischer wurden 1,3 Gewichtsteile eines Perlglanzpigments (Iriodin® 9103 Sterling Silber WR der Firma Merck) und 2,3 Gewichtsteile Butylglykol gemischt. Anschließend wurde diese Mischung der vorstehend beschriebenen unter starkem Rühren portionsweise hinzugegeben.

Die Tabelle 1 gibt einen Überblick über die Zusammensetzung des erfindungsgemäßen Wasserbasislacks gemäß Beispiel 3.

Für den Vergleichsversuch V2 wurde das Beispiel 3 wiederholt, nur daß anstelle der erfindungsgemäßen Primärdispersion gemäß Beispiel 2 die wäßrige Polyurethanharzdispersion gemäß Beispiel 1 der Patentschrift DE-A-43 39 870 [Komponente (ii)] verwendet wurde.

Für den Vergleichsversuch V3 wurde das Beispiel 3 wiederholt, nur das anstelle der erfindungsgemäßen Primärdispersion gemäß Beispiel 2 die bekannte Sekundärdispersion gemäß dem Vergleichsversuch V 1 verwendet wurde.

Die stoffliche Zusammensetzung der nicht erfindungsgemäßen Wasserbasislacke V3 und V2 findet sich ebenfalls in der Tabelle 1.

**Tabelle 1: Die Zusammensetzung des erfindungsgemäßenWasserbasislacks (Beispiel 3) und der nicht erfindungsgemäBen Wasserbasislacke (Vergleichsversuch V2 und V3)**

| **Bestandteile** | **Vergleichsversuche:** | | **Beispiel:** |
|---|---|---|---|
| | **V2** | **V3** | **3** |
| Deionisiertes Wasser | 9,5 | 9,5 | 9,5 |
| Komponente (i) | 10,5 | 10,5 | 10,5 |
| Komponente (ii) | 13,5 | - | - |
| Sekundärdispersion V1 | - | 13,5 | - |
| Primärdispersion (Bsp. 2) | - | - | 13,5 |
| Verdickungsmittel 1 | 10,4 | 10,4 | 10,4 |
| Deionisiertes Wasser | 8,0 | 8,0 | 8,0 |
| Ammoniaklösung | 0,28 | 0,28 | 0,28 |
| Verdickungsmittel 2 | 18,0 | 18,0 | 18,0 |
| Pigmentpaste | 4,2 | 4,2 | 4,2 |
| Füllstoffpaste | 10,2 | 10,2 | 10,2 |
| Butylglykol | 2,0 | 2,0 | 2,0 |
| Melaminharz | 3,5 | 3,5 | 3,5 |
| Aluminiumpaste | 0,4 | 0,4 | 0,4 |
| Butylglykol | 0,6 | 0,6 | 0,6 |
| Iriodin 9103 | 1,3 | 1,3 | 1,3 |
| Butylglykol | 2,3 | 2,3 | 2,3 |

Die Viskosität der Wasserbasislacke der Tabelle 1 wurde mit deionisiertem Wasser auf 90 bis 95 mPas bei einer Scherrate von 1.004/s eingestellt.

### Beispiel 4 und Vergleichsversuche V4 und V5

### Die Herstellung einer erfindungsgemäßen Mehrschichtlackierung (Beispiel 4) und von nicht erfindungsgemäßen Mehrschichtlackierungen (Vergleichsversuche V4 und V5)

Für die Herstellung der erfindungsgemäßen Mehrschichtlackierung des Beispiels 4 wurde der erfindungsgemäBe Wasserbasislack des Beispiels 3 (vgl. Tabelle 1) verwendet.

Für die Herstellung der nicht erfindungsgemäßen Mehrschichtlackierung des Vergleichsversuchs V4 wurde der nicht erfindungsgemäße Wasserbasislack des Vergleichsversuchs V2 (vgl. Tabelle 1) verwendet.

Für die Herstellung der nicht erfindungsgemäßen Mehrschichtlackierung des Vergleichsversuchs V5 wurde der nicht erfindungsgemäße Wasserbasislack des Vergleichsversuchs V3 (vgl. Tabelle 1) verwendet.

### A. Die Herstellung der Prüftafeln:

Für das Beispiel 4 und die Vergleichsversuche V4 und V5 wurden zunächst Prüftafeln hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Dünnschichtfüller (Ecoprime® 60 der Firma BASF Coatings AG; anthrazitfarben) beschichtet, wonach die resultierende Füllerschicht während fünf Minuten bei 20 °C und einer relativen Luftfeuchtigkeit von 65% abgelüftet und in einem Umluftofen während fünf Minuten bei 80 °C getrocknet wurde. Hiernach wies die Füllerschicht eine Trockenschichtdicke von 15 µm auf.

Nach dem Abkühlen der Prüftafeln auf 20 °C wurden die Wasserbasislacke der Tabelle 1 appliziert, während fünf Minuten bei 20 °C und einer relativen Luftfeuchtigkeit von 65% abgelüftet und in einem Umluftofen während fünf Minuten bei 80 °C getrocknet, so daß die getrockneten Basislackschichten eine Trockenschichtdicke von etwa 15µm aufwiesen.

Nach dem erneuten Abkühlen der Prüftafeln auf 20 °C wurden die Basislackschichten mit einem Pulverslurry-Klarlack gemäß der internationalen Patentanmeldung WO 96/32452 überschichtet. Die resultierende Pulverslurry-Klarlackschichten wurden während 3 Minuten bei 20 °C und einer relativen Luftfeuchtigkeit von 65% abgelüftet, und in einem Umluftofen während fünf Minuten bei 55 °C getrocknet. Die Trockenschichtdicke der resultierenden Klarlackschichten lag bei 55 bis 57 µm.

Nach der Applikation aller drei Schichten wurden sie gemeinsam während 30 Minuten bei 155 °C eingebrannt, wodurch die erfindungsgemäße Mehrschichtlackierung des Beispiels 3 und die nicht erfindungsgemäßen Mehrschichtlackierungen der Vergleichsversuche V4 und V5 resultierten.

### B. Die Herstellung von Reparaturlackierungen:

Zur Simulation der Reparaturlackierung der gesamten Karosserie in der Linie (Serienreparatur) wurden die Prüftafeln gemäß dem Beispiel 3 und den Vergleichsversuchen V4 und V5 mit einem Schleifpapier mit 1.200-Körnung angeschliffen und gemäß der vorstehend beschriebenen Vorschrift noch einmal mit der jeweils gleichen Mehrschichtlackierung beschichtet (Doppellackierung).

### C. Die Bestimmumg der Kochergrenze und Rißbildungsgrenze (mud cracking):

Nach der in dem vorstehenden Abschnitt A. angegebenen Vorschrift wurden Mehrschichtlackierungen hergestellt, bei denen die Basislackierungen im Keil von 3 bis 40µm aufgetragen wurden. Die Klarlackierungen wiesen eine Schichtdicke von 55 bis 57µm auf. Die Rißbildungsgrenze und die Kochergrenze geben die Schichtdicke an, ab der Oberflächenstörungen (hier Rißbildung = mud cracking und Kocher) in der Klarlackierung auftreten. Die Rißbildungsgrenze und die Kochergrenze sind ein Maß für die Verträglichkeit des Wasserbasislacks mit dem Klarlack bzw. der Basislackierung mit der Klarlackierung: je höher die Rißbildungsgrenze oder die Kochergrenze, desto besser die Verträglichkeit. Die entsprechenden Versuchsergebnisse finden sich in der Tabelle 2.

### D. Die Prüfung der Klarlackhaftung:

Die Prüfung der Klarlackhaftung wurde an unbelasteten Prüftafeln [vg1. den vorstehenden Abschnitt A. (Erstlackierung) und den vorstehenden Abschnitt B. (Reparaturlackierung)] nach drei Tagen Lagerung bei Raumtemperatur durchgeführt. Zu diesem Zweck wurden die Mehrschichtlackierungen mit einem Messer oder einem spitzen Dorn bis auf die Stahloberfläche geritzt. Anschließend wurden die Ritze während einer Minute unter Hochdruck mit Wasser bestrahlt (Hochdruckreiniger der Firma Kärcher), wobei der Wasserdruck 230 bar, die Wassertemperatur 20 °C und der Abstand der rotierenden Spritzdüse zu den Prüftafeln 6cm betrug. Die Beurteilung erfolgte visuell: zeigte die Mehrschichtlackierung keine Beschädigung, wurde sie mit "in Ordnung" (i.o.) beurteilt. Fand eine Delamination statt, wurde dies mit "nicht in Ordnung" (n.i.o.) beurteilt. Die Versuchsergebnisse finden sich ebenfalls in der Tabelle 2.

### E. Die Prüfung der Zwischenschichthaftung nach der Kugelschußprüfung:

Die Kugelschußprüfung wurde entsprechend der in der Fachwelt allgemein bekannten Daimler Chrysler- Spezifikation durchgeführt. Die entsprechenden Ergebnisse finden sich ebenfalls in der Tabelle 2.

### F. Die Prüfung der Zwischenschichthaftung nach der Belastung mit Schwitzwasserkonstantklima nach DIN 50017:

Die nach der in Abschnitt A. angegebenen Vorschrift hergestellten Prüftafeln wurden dem Schwitzwasserkonstantklima nach DIN 50017 ausgesetzt. Hiernach wurde die Zwischenschichthaftung mit dem Gitterschnittest nach DIN EN ISO 2409 nach 0 und 2 Stunden Regeneration bestimmt. Die Versuchsergebnisse finden sich ebenfalls in der Tabelle 2.

**Tabelle 2: Die Ergebnisse der Prüfungen gemäß den Abschnitten C. bis F.**

| **Prüfungen** | **Vergleichsversuche:** | | **Beispiel: 4** |
|---|---|---|---|
| | **V4** | **V5** | |
| Abschnitt C.: | | | |
| Rißbildungsgrenze (µm): | 23 | 10 | 37 |
| Kochergrenze (µm): | 24 | 16 | 28 |

| Abschnitt D.: | | | |
|---|---|---|---|
| Wasserstrahltest: | n.i.o.¹⁾ | n.i.o.¹⁾ | i.o.²⁾ |

| Abschnitt E.: | | | |
|---|---|---|---|
| Kugelschußprüfung: | | | |
| Erstlackierung | 8/1 | 11/0 | 6/1 |
| Reparaturlackierung | 15/0 | 30/0 | 14/1 |

| Abschnitt F.: | | | |
|---|---|---|---|
| Gitterschnitttest: | | | |
| Nach 0 Stunden Regeneration | GT0 | GT2-3 | GT0 |
| Nach 2 Stunden Regeneration | GT0 | GT2 | GT0 |

| | | | |
|---|---|---|---|
| 1) großflächige Klarlackdelamination | | | |
| 2) keine signifikante Delamination | | | |

Die Ergebnisse der Tabelle 2 belegen, daß der erfindungsgemäße Wasserbasislack gemäß Beispiel 3 und die erfindungsgemäße Mehrschichtlackierung gemäß Beispiel 4 den nicht erfindungsgemäßen Wasserbasislacken gemäß den Vergleichsversuchen V2 und V3 und den nicht erfindungsgemäßen Mehrschichtlackierungen gemäß den Vergleichsversuchen V4 und V5 hinsichtlich der Verträglichkeit von Wasserbasislack und Pulverslurry-Klarlack und der Zwischenschichthaftung eindeutig überlegen sind. Des weiteren wird untermauert, daß der nicht erfindungsgemäße Wasserbasislack V3 nicht mit dem Pulverslurry-Klarlack verträglich ist und die hiermit hergestellte nicht erfindungsgemäße Mehrschichtlackierung V5 auch eine sehr schlechte Einzelschlagbeständigkeit aufweist.

## Patentansprüche

1. Selbstvernetzendes Polyurethan (B) mit mindestens einer seitenständigen und/oder mindestens einer endständigen Ethenylarylengruppe, herstellbar indem man
(1) mindestens ein Polyurethanpräpolymer (B1), das mindestens eine freie und mindestens eine blockierte Isocyanatgruppe enthält, wobei die Blockierungsmittel aus der Gruppe bestehend aus
i) Phenolen,
ii) Lactamen,
iii) aktiven methylenischen Verbindungen,
iv) Alkoholen,
v) Mercaptanen,
vi) Säureamiden,
vii) Imiden,
viii) Aminen,
ix) Imidazolen,
x) Harnstoffen,
xi) Carbamaten,
xii) Iminen,
xiii) Oximen oder Ketoximen,
xiv) Salzen der schwefeligen Säure,
xv) Hydroxamsäureestern,
xvi) substituierten Pyrazolen, Ketoximen, Imidazolen oder Triazolen; sowie
xvii) Gemischen dieser Blockierungsmittel, ausgewählt wurden, mit
(2) mindestens einem Addukt (B2) umsetzt, das erhältlich ist, indem man
(2.1) mindestens ein Ethenylarylenmonoisocyanat und
(2.2) mindestens ein Polyol, Polyamin und/oder mindestens eine mindestens eine Hydroxylgruppe und mindestens eine Aminogruppe enthaltenden Verbindung
so miteinander umsetzt, daß mindestens eine isocyanatreaktiven Gruppe im Addukt (B2) verbleibt.

2. Das Polyurethan (B) nach Anspruch 1, **dadurch gekennzeichnet, daß** das Ethenylarylenmonoisocyanat die allgemeine Formel I aufweist:
**CH**_{**2**}**=C(R)-A-X-NCO** (I),
worin die Variablen die folgende Bedeutung haben:
A = substituierter oder unsubstituierter C₆-C₂₀-Arylenrest;
R = Wasserstoffatom, ein Halogenatom, eine Nitrilgruppe, eine substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest; und
X = zweibindiger organischer Rest.

3. Das Polyurethan (B) nach Anspruch 1 oder 2, **dadurch gekennzeichnet, daß** es hydrophile funktionelle Gruppen, insbesondere Carbonsäuregruppen und/oder Carboxylatgruppen, enthält.

4. Das Polyurethan (B) nach einem der Ansprüche 1 bis 3, **dadurch gekennzeichnet, daß** die noch vorhandenen Isocyanatgruppen blockiert werden.

5. Das Polyurethan (B) nach einem der Ansprüche 1 bis 4, **dadurch gekennzeichnet, daß** als Blockierungsmittel mindestens ein Ketoxim, insbesondere Methylethylketoxim, verwendet wird.

6. Pfropfmischpolymerisat, enthaltend
A) mindestens ein (Meth)Acrylatcopolymerisat und
B) mindestens ein Polyurethan,
herstellbar indem man
1) mindestens ein selbstvernetzendes olefinisch ungesättigtes Polyurethan (B) mit mindestens einer seitenständigen und/oder mindestens einer endständigen Ethenylarylengruppeund mindestens einer blockierten Isocyanatgruppe in einem wäßrigen Medium dispergiert, wonach man
2) eine Mischung aus mindestens einem Monomer (a1) mit mindestens einer isocyanatreaktiven funktionellen Gruppe und mindestens einem hiermit copolymerisierbaren Monomer (a2) in der Gegenwart des Polyurethans (B) oder der Polyurethane (B) in Emulsion radikalisch copolymerisiert.

7. Das Pfropfmischpolymerisat nach Anspruch 6, dadurch gekennzichnet, daß die Ethenylarylengruppe der allgemeinen Formel II entspricht:
**CH**_{**2**}**=C(R)-A-** (II),
worin die Variable A für einen substituierten oder unsubstituierten C₆-C₂₀-Arylenrest und die Variable R für ein Wasserstoffatom, ein Halogenatom, eine Nitrilgruppe, einen substituierten oder unsubstituierten Alkyl-, Cycloalkyl-, Alkylcycloalkyl-, Cycloalkylalkyl-, Aryl-, Alkylaryl-, Cycloalkylaryl- Arylalkyl- oder Arylcycloalkylrest stehen.

8. Das Pfropfmischpolymerisat nach Anspruch 7, **dadurch gekennzeichnet, daß** die Ethenylarylengruppe über einen zweibindigen oder dreibindigen, mindestens eine Urethan- und/oder Harnstoffgruppe enthaltenden verknüpfenden Rest III mit der Polyurethanhauptkette verbunden ist.

9. Das Pfropfmischpolymerisat nach Anspruch 8, **dadurch gekennzeichnet, daß** der verknüpfenden Rest III mindestens eine der zweibindigen oder dreibindigen Gruppen der allgemeinen Formeln IIIa bis IIIc enthält
**-X-NH-C(O)-O-** (IIIa),
**-X-NH-C(O)-NH-** (IIIb)
oder
**-X-NH-C(O)-N<** (IIIc),
worin X einen zweibindigen organischen Rest bezeichnet.

10. Das Pfropfmischpolymerisat nach einem der Ansprüche 6 bis 9, **dadurch gekennzeichnet, daß** das aufgepfropfte (Meth)Acrylatcopolymerisat (A) und/oder das gepfropfte Polyurethan (B) hydrophile funktionelle Gruppen, insbesondere Carbonsäuregruppen und/oder Carboxylatgruppen, enthalten.

11. Das Pfropfmischpolymerisat nach Anspruch 10, **dadurch gekennzeichnet, daß** das gepfropfte Polyurethan (B) Carbonsäuregruppen und/oder Carboxylatgruppen enthält.

12. Das Pfropfmischpolymerisat nach einem der Ansprüche 6 bis 11, **dadurch gekennzeichnet, daß** das Polyurethan (B) ein Polyurethan (B) gemäß einem der Ansprüche 1 bis 5 ist.

13. Dichtungsmassen, Klebstoffe und Beschichtungsstoffe, **dadurch gekennzeichnet, daß** sie mindestens eines der Polyurethane (B) gemäß einem der Ansprüche 1 bis 5 und/oder mindestens eines der Pfropfmischpolymerisate gemäß einem der Ansprüche 6 bis 11 enthalten.

14. Die Beschichtungsstoffe nach Anspruch 13, **dadurch gekennzeichnet, daß** es sich um Wasserbasislacke handelt.

15. Die Verwendung der Beschichtungsstoffe nach Anspruch 14 zur Herstellung von farb- und/oder effektgebende Mehrschichtlackierungen.

16. Verfahren zur Herstellung farb- und/oder effektgebender Mehrschichtlackierungen auf grundierten oder ungrundierten Substraten, umfassend die folgenden Verfahrensschritte:
I) Herstellen einer Basislackschicht durch Applikation eines Wasserbasislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung und die Klarlackierung resultieren (Naß-in-naß-Verfahren);
**dadurch gekennzeichnet, daß** man einen Wasserbasislack gemäß Anspruch 14 verwendet.

17. Verfahren zur Herstellung farb- und/oder effektgebender Mehrschichtlackierungen auf grundierten oder ungrundierten Substraten, umfassend die folgenden Verfahrensschritte:
(I) Herstellen einer Füllerlackschicht durch Applikation eines Füllers auf das Substrat,
(II) Härtung der Füllerlackschicht, wodurch die Füllerschicht resultiert,
(III) Herstellen einer Basislackschicht durch Applikation eines Wasserbasislacks auf die Füllerschicht,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackierung und die Klarlackierung resultieren (Naß-in-naß-V erfahren);
**dadurch gekennzeichnet, daß** man einen Wasserbasislack gemäß Anspruch 14 verwendet.

18. Verfahren zur Herstellung farb- und/oder effektgebender Mehrschichtlackierungen auf grundierten oder ungrundierten Substraten, umfassend die folgenden Verfahrensschritte:
(I) Herstellen einer Füllerlackschicht durch Applikation eines Füllers auf das Substrat,
(II) Trocknung der Füllerlackschicht,
(III) Herstellen einer Basislackschicht durch Applikation eines Wasserbasislacks auf die Füllerlackschicht,
(IV) Trocknen der Basislackschicht,
(V) Herstellen einer Klarlackschicht durch Applikation eines Klarlacks auf die Basislackschicht und
(VI) gemeinsame Härtung der Füllerlackschicht, der Basislackschicht und der Klarlackschicht, wodurch der Füller, die Basislackierung und die Klarlackierung resultieren (erweitertes Naß-in-naß-Verfahren);
**dadurch gekennzeichnet, daß** man einen Wasserbasislack gemäß Anspruch 14 verwendet.

19. Das Verfahren nach einem der Ansprüche 17 bis 18, **dadurch gekennzeichnet, daß** man als Klarlack einen Pulverslurry-Klarlack verwendet.

## Claims

1. Self-crosslinking polyurethane (B) containing at least one pendant and/or at least one terminal ethenylarylene group and preparable by
(1) reacting at least one polyurethane prepolymer (B1) containing at least one free and at least one blocked isocyanate group, where the blocking agents have been selected from the group consisting of
i) phenols,
ii) lactams,
iii) active methylemic compounds,
iv) alcohols,
v) mercaptans,
vi) acid amides,
vii) imides,
viii) amines,
ix) imidazoles,
x) ureas
xi) carbamates,
xii) imines,
xiii) oximes or ketoximes,
xiv) salts of sulphurous acid,
xv) hydroxamic esters,
xvi) substituted pyrazoles, ketoximes, imidazoles or triazoles; and also
xvii) mixtures of these blocking agents, with
(2) at least one adduct (B2) obtainable by
(2.1) reacting at least one ethenylarylene monoisocyanate and
(2.2) at least one polyol, polyamine and/or at least one compound containing at least one hydroxyl group and at least one amino group
with one another such that at least one isocyanate-reactive group remains in the adduct (B2).

2. Polyurethane (B) according to Claim 1, **characterized in that** the ethenylarylene monoisocyanate has the general formula I:
**CH**_{**2**}**=C (R) -A-X-NCO** (I)
in which the variables have the following meanings:
A = substituted or unsubstituted C₆-C₂₀ arylene radical;
R = hydrogen atom, a halogen atom, a nitrile group, a substituted or unsubstituted alkyl, cycloalkyl, alkylcycloalkyl, cycloalkylalkyl, aryl, alkylaryl, cycloalkylaryl arylalkyl or arylcycloalkyl radical; and
X = divalent organic radical.

3. Polyurethane (B) according to Claim 1 or 2, **characterized in that** it contains hydrophilic functional groups, especially carboxylic acid groups and/or carboxylate groups.

4. Polyurethane (B) according to one of Claims 1 to 3, **characterized in that** the isocyanate groups still present are blocked.

5. Polyurethane (B) according to one of Claims 1 to 4, **characterized in that** at least one ketoxime, especially methyl ethyl ketoxime, is used as blocking agent.

6. Graft copolymer comprising
A) at least one (meth)acrylate copolymer and
B) at least one polyurethane
preparable by
1) dispersing at least one self-crosslinking olefinically unsaturated polyurethane (B) containing at least one pendant and/or at least one terminal ethenylarylene group and at least one blocked isocyanate group in an aqueous medium and then
2) subjecting a mixture of at least one monomer (a1) containing at least one isocyanate-reactive functional group and at least one monomer (a2) copolymerizable therewith to free-radical copolymerization in emulsion in the presence of the polyurethane (B) or of the polyurethanes (B).

7. Graft copolymer according to Claim 6, **characterized in that** the ethenylarylene group corresponds to the general formula II:
**CH**_{**2**}**=C (R) -A-** (II)
in which the variable A is a substituted or unsubstituted C₆-C₂₀ arylene radical and the variable R stands for a hydrogen atom, a halogen atom, a nitrile group, a substituted or unsubstituted alkyl, cycloalkyl, alkylcycloalkyl, cycloalkylalkyl, aryl, alkylaryl, cycloalkylaryl arylalkyl or arylcycloalkyl radical.

8. Graft copolymer according to Claim 7,
**characterized in that** the ethenylarylene group is attached to the polyurethane main chain by way of a divalent or trivalent linking radical III containing at least one urethane group and/or urea group.

9. Graft copolymer according to Claim 8, **characterized in that** the linking radical III contains at least one of the divalent or trivalent groups of the general formulae IIIa to IIIc
**-X-NH-C(O)-O-** (IIIa)
**-X-NH-C(O)-NH-** (IIIb)
or
**-X-NH-C(O)-N<** (IIIc)
in which X denotes a divalent organic radical.

10. Graft copolymer according to one of Claims 6 to 9, **characterized in that** the grafted-on (meth)acrylate copolymer (A) and/or the grafted polyurethane (B) contain hydrophilic functional groups, especially carboxylic acid groups and/or carboxylate groups.

11. Graft copolymer according to Claim 10, **characterized in that** the grafted polyurethane (B) contains carboxylic acid groups and/or carboxylate groups.

12. Graft copolymer according to one of Claims 6 to 11, **characterized in that** the polyurethane (B) is a polyurethane (B) according to one of Claims 1 to 5.

13. Sealing compounds, adhesives and coating materials, **characterized in that** they comprise at least one of the polyurethanes (B) according to one of Claims 1 to 5 and/or at least one of the graft copolymers according to one of Claims 6 to 11.

14. Coating materials according to Claim 13, **characterized in that** they are aqueous basecoat materials.

15. Use of the coating materials according to Claim 14 for producing multicoat colour and/or effect paint systems.

16. Process for producing multicoat colour and/or effect paint systems on primed or unprimed substrates, comprising the following steps:
I) preparing a basecoat film by applying an aqueous basecoat material to the substrate,
(II) drying the basecoat film,
(III) preparing a clearcoat film by applying a clearcoat material to the basecoat film, and
(IV) jointly curing the basecoat film and the clearcoat film to give the basecoat and the clearcoat (wet-on-wet technique);
**characterized in that** an aqueous basecoat material according to Claim 14 is used.

17. Process for producing multicoat colour and/or effect paint systems on primed or unprimed substrates, comprising the following steps:
(I) preparing a surfacer film by applying a surfacer to the substrate,
(II) curing the surfacer film to give the surfacer coat,
(III) preparing a basecoat film by applying an aqueous basecoat material to the surfacer coat,
(IV) drying the basecoat film,
(V) preparing a clearcoat film by applying a clearcoat material to the basecoat film, and
(VI) jointly curing the basecoat film and the clearcoat film to give the basecoat and the clearcoat (wet-on-wet technique);
**characterized in that** an aqueous basecoat material according to Claim 14 is used.

18. Process for producing multicoat colour and/or effect paint systems on primed or unprimed substrates, comprising the following process steps:
(I) preparing a surfacer film by applying a surfacer to the substrate,
(II) drying the surfacer film,
(III) preparing a basecoat film by applying an aqueous basecoat material to the surfacer film,
(IV) drying the basecoat film,
(V) preparing a clearcoat film by applying a clearcoat material to the basecoat film, and
(VI) jointly curing the surfacer film, the basecoat film, and the clearcoat film to give the surfacer, the basecoat, and the clearcoat (extended wet-on-wet technique);
**characterized in that** an aqueous basecoat material according to Claim 14 is used.

19. Process according to one of Claims 17 to 18, **characterized in that** a powder slurry clearcoat material is used as the clearcoat material.

## Revendications

1. Polyuréthanne auto-réticulant (B) présentant au moins un groupe éthénylarylène de côté de chaîne et/ou au moins un de fin de chaîne, qu'on peut fabriquer en :
(1) faisant réagir au moins un prépolymère de polyuréthanne (B1) qui contient au moins un groupe isocyanate libre et au moins un bloqué, l'agent de blocage étant sélectionné parmi le groupe constitué de :
i) phénols,
ii) lactames,
iii) composés méthyléniques actifs,
iv) alcools,
v) mercaptans,
vi) amides d'acides,
vii) imides,
viii) amines,
ix) imidazols,
x) urées,
xi) carbamates,
xii) imines,
xiii) oximes ou cétoximes,
xiv) sels d'acide sulfurique,
xv) esters d'acide hydroxamique,
xvi) pyrazols substitués, cétoximes, imidazols ou triazols, et
xvii) mélanges de ces agents de blocage, avec :
(2) au moins un produit d'addition (B2) qu'on peut obtenir en faisant réagir:
(2.1) au moins un monoisocyanate d'éthénylarylène et
(2.2) au moins un polyol, une polyamine et/ou au moins un composé contenant au moins un groupe hydroxyle et au moins un groupe amino,
l'un avec l'autre de telle sorte qu'il reste dans le produit d'addition (B2) au moins un groupe réactif vis-à-vis de l'isocyanate.

2. Polyuréthanne (B) selon la revendication 1, **caractérisé en ce que** le monoisocyanate d'éthénylarylène présente la formule générale I :
**CH**_{**2**}**=C(R)-A-X-NCO** **(I),**
dans laquelle les variables ont la signification suivante :
A = radical arylène en C₆-C₂₀ substitué ou non substitué;
R = atome d'hydrogène, un atome d'halogène, un groupe nitrile, un radical alkyle, cycloalkyle, alkylcycloalkyle, cycloalkylalkyle, aryle, alkylaryle, cycloalkylaryle arylalkyle ou arylcycloalkyle substitué ou non substitué, et
X = un radical organique à liaison double.

3. Polyuréthanne (B) selon la revendication 1 ou 2, **caractérisé en ce qu'**il contient des groupes fonctionnels hydrophiles, en particulier des groupes d'acide carboxylique et/ou des groupes carboxylate.

4. Polyuréthanne (B) selon l'une des revendications 1 à 3, **caractérisé en ce que** les groupes isocyanate encore présents sont bloqués.

5. Polyuréthanne (B) selon l'une des revendications 1 à 4, **caractérisé en ce qu'**on utilise comme agent de blocage au moins un cétoxime, en particulier un méthyléthylcétoxime.

6. Polymère mixte greffé, contenant :
A) au moins un copolymère de (méth)acrylate et
B) au moins un polyuréthanne,
qu'on peut préparer :
1) en dispersant dans un milieu aqueux au moins un polyuréthanne (B) auto-réticulant oléfiniquement insaturé avec au moins un groupe éthénylarylène de côté de chaîne et/ou au moins un de fin de chaîne et au moins un groupe isocyanate bloqué, après quoi, on
2) copolymérise en émulsion par voie radicalaire un mélange constitué d'au moins un monomère (a1) avec au moins un groupe fonctionnel réactif vis-à-vis de l'isocyanate et au moins un monomère (a2) copolymérisable avec celui-ci en présence du polyuréthanne (B) ou des polyuréthannes (B).

7. Polymère mixte greffé selon la revendication 6, **caractérisé en ce que** le groupe éthénylarylène répond à la formule générale II :
**CH**_{**2**}**=C(R)-A-** **(II),**
dans laquelle la variable A représente un radical arylène en C₆-C₂₀ substitué ou non substitué et la variable R représente un atome d'hydrogène, un atome d'halogène, un groupe nitrile, un radical alkyle, cycloalkyle, alkylcycloalkyle, cycloalkylalkyle, aryle, alkylaryle, cycloalkylaryle arylalkyle ou arylcycloalkyle substitué ou non substitué.

8. Polymère mixte greffé selon la revendication 7, **caractérisé en ce que** le groupe éthénylarylène est relié à la chaîne principale de polyuréthanne par un radical III réticulant à deux liaisons ou à trois liaisons contenant au moins un groupe uréthane et/ou un groupe urée.

9. Polymère mixte greffé selon la revendication 8, **caractérisé en ce que** le radical III réticulant contient au moins un des groupes à liaison double ou à liaison triple de formules générales IIIa à IIIc
**-X-NH-C(O)-O-** **(IIIa),**
**-X-NH-C(O)-NH-** **(IIIb)**
ou
**-X-NH-C(0)-N<** **(IIIc),**
dans lesquelles X désigne un radical organique à liaison double.

10. Polymère mixte greffé selon l'une des revendications 6 à 9, **caractérisé en ce que** le copolymère de (méth)acrylate (A) greffé et/ou le polyuréthanne (B) greffé contiennent des groupes fonctionnels hydrophiles, en particulier des groupes d'acide carboxylique et/ou des groupes carboxylate.

11. Polymère mixte greffé selon la revendication 10, **caractérisé en ce que** le polyuréthanne (B) greffé contient des groupes d'acide carboxylique et/ou des groupes carboxylate.

12. Polymère mixte greffé selon l'une des revendications 6 à 11, **caractérisé en ce que** le polyuréthanne (B) est un polyuréthanne (B) selon l'une des revendications 1 à 5.

13. Masses d'étanchéité, colles et matières de revêtement, **caractérisées en ce qu'**elles contiennent au moins un des polyuréthannes (B) selon l'une des revendications 1 à 5 et/ou au moins un des polymères mixtes greffés selon l'une des revendications 6 à 11.

14. Matières de revêtement selon la revendication 13, **caractérisées en ce qu'**il s'agit d'un vernis à base d'eau.

15. Utilisation des matières de revêtement selon la revendication 14 pour la préparation de vernissages de couleur et/ou à effets à plusieurs couches.

16. Procédé de préparation de vernissages de couleur et/ou à effets à plusieurs couches sur des substrats avec couche de fond ou sans couche de fond, comprenant les étapes de procédé suivantes:
(I) préparation d'une couche de vernis de base par application d'un vernis de base aqueux sur le substrat;
(II) séchage de la couche de vernis de base;
(III) préparation d'une couche de vernis clair par application d'un vernis clair sur la couche de vernis de base, et
(IV) durcissement commun de la couche de vernis de base et de la couche de vernis clair, dont il ressort le vernissage de base et le vernissage clair (procédé mouillé sur mouillé);
**caractérisé en ce qu'**on utilise un vernis de base aqueux selon la revendication 14.

17. Procédé de préparation de vernissages de couleur et/ou à effets à plusieurs couches sur des substrats avec couche de fond ou sans couche de fond, comprenant les étapes de procédé suivantes :
(I) préparation d'une couche de vernis avec matières de charge par application d'une matière de charge sur le substrat;
(II) durcissement de la couche de vernis avec matières de charge dont il résulte la couche avec matières de charge;
(III) préparation d'une couche de vernis de base par application d'un vernis de base aqueux sur la couche avec matières de charge;
(IV) séchage de la couche de vernis de base;
(V) préparation d'une couche de vernis clair par application d'un vernis clair sur la couche de vernis de base, et
(VI) durcissement conjoint de la couche de vernis de base et de la couche de vernis clair dont il résulte le vernissage de base et le vernissage clair (procédé mouillé sur mouillé);
**caractérisé en ce qu'**on utilise un vernis de base aqueux selon la revendication 14.

18. Procédé de préparation de vernissages de couleur et/ou à effets à plusieurs couches sur des substrats avec couche de fond ou sans couche de fond, comprenant les étapes de procédé suivantes :
(I) préparation d'une couche de vernis avec matières de charge par application d'une matière de charge sur le substrat;
(II) séchage de la couche de vernis avec matières de charge;
(III) préparation d'une couche de vernis de base par application d'un vernis de base aqueux sur la couche de vernis avec matières de charge;
(IV) séchage de la couche de vernis de base;
(V) préparation d'une couche de vernis clair par application d'un vernis clair sur la couche de vernis de base, et
(VI) durcissement conjoint de la couche de vernis avec matières de charge, de la couche de vernis de base et de la couche de vernis clair dont il résulte la matière de charge, le vernissage de base et le vernissage clair (procédé mouillé sur mouillé étendu);
**caractérisé en ce qu'**on utilise un vernis de base aqueux selon la revendication 14.

19. Procédé selon l'une des revendications 17 à 18, **caractérisé en ce qu'**on utilise comme vernis clair un vernis clair en poudre-slurry.
